(19) **Europäisches Patentamt / European Patent Office / Office européen des brevets**

(11) **EP 3 067 826 B1**

(12) **EUROPEAN PATENT SPECIFICATION**

(45) Date of publication and mention
of the grant of the patent:
**05.05.2021 Bulletin 2021/18**

(51) Int Cl.:
***G06K 9/00*** *(2006.01)*   ***B60Q 1/04*** *(2006.01)*
***G01B 11/16*** *(2006.01)*

(21) Application number: **16158634.2**

(22) Date of filing: **04.03.2016**

(54) **IMAGE PROCESSING SYSTEM AND PARALLAX IMAGE GENERATION METHOD**

BILDVERARBEITUNGSSYSTEM UND VERFAHREN ZUR PARALLAX-BILDERZEUGUNG

SYSTÈME DE TRAITEMENT D'IMAGES ET PROCÉDÉ DE GÉNÉRATION D'IMAGE DE PARALLAXE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2015 JP 2015047923
21.01.2016 JP 2016009428**

(43) Date of publication of application:
**14.09.2016 Bulletin 2016/37**

(73) Proprietor: **Ricoh Company, Ltd.
Tokyo 143-8555 (JP)**

(72) Inventors:
• **SEKIGUCHI, Hiroyoshi
  Tokyo 143-8555 (JP)**
• **WATANABE, Eita
  Tokyo 143-8555 (JP)**
• **KUROMIZU, Reiko
  Tokyo 143-8555 (JP)**
• **WATANABE, Yoshikazu
  Tokyo 143-8555 (JP)**
• **TAKAHASHI, Yuji
  Tokyo 143-8555 (JP)**
• **INOUE, Takayuki
  Tokyo 143-8555 (JP)**
• **FUJIMOTO, Hideomi
  Yokohama-shi, Kanagawa 222-8530 (JP)**

(74) Representative: **SSM Sandmair
Patentanwälte Rechtsanwalt
Partnerschaft mbB
Joseph-Wild-Straße 20
81829 München (DE)**

(56) References cited:
**US-A1- 2006 072 914    US-A1- 2008 029 701
US-A1- 2008 294 315    US-A1- 2011 012 510
US-A1- 2011 074 932**

**EP 3 067 826 B1**

**Description**

BACKGROUND OF THE INVENTION

1. Field of the Invention

The present invention relates to an image processing system and a parallax image generation method.

2. Description of the Related Art

Conventionally, technologies of detecting object information, such as whether there is an object, the distance to the object, etc., by using an imaging device including a plurality of imaging units, are known.

Furthermore, in recent years, light projection devices installed in a movable body are actively being developed (see, for example, Japanese Patent No. 5138517).

However, by installing a conventional imaging device and light projection device in a movable body, it has not been possible to obtain images that are effective for detecting object information with respect to dark places.

The invention disclosed in US 2008/0029701 A1 provides a night-vision imaging apparatus including: a light emission unit that emits infrared light; a solid-state imaging device that converts the infrared light into a first signal; a light-emission control unit that allows the light emission unit to emit the infrared light which is modulated according to a temporally pseudo-random first modulation; and an extraction unit that extracts, according to the first modulation, a signal corresponding to the infrared light emitted by the light emission unit from the first signal.

US 2008/0294315 A1 discloses a control system and method for automatically controlling headlights of a vehicle including an optical system for imaging external sources of light within a predetermined field of view and an image processing system for processing images from the optical system and providing a control signal for controlling the headlights as a function of the processed images. Processing the images may entail identifying a source of radiation in the images, the control signal being provided to dim the headlights when a source of radiation in the images is identified as a headlight or taillight of another vehicle.; To this end, the image processing system may include a trained pattern recognition system for processing the images to identify the source of radiation, e.g., a pattern recognition algorithm generated from data of possible sources of radiation including headlights and taillights of vehicles and patterns of received radiation from the possible sources.

US 2011/0074932 A1 discloses a lens and aperture device for determining 3D information. A projector projects an optical pattern toward a surface. The camera has at least two off-axis apertures thereon, arranged to obtain an image of the projected pattern including defocused information. The camera is movable between different positions to image the surface from said different positions, and the projector is at a specified angle of at least 5 DEG relative to said camera. A processor carries out a first operation using information received through the apertures to determine a pose of said camera, and to determine three dimensional information about the object based on a degree of deformation of said optical pattern on said surface indicative of a three dimensional surface.; An embodiment projects a grid of laser dots and uses laser-dot defocusing for approximate Z and thus grid correspondence, which can greatly increase the working depth of the system.

US 2006/072914 A1 discloses an object recognition apparatus having an active range finder having a floodlight unit which floodlights a light onto a target object, and determines a distance up to a target object on the basis of a reflected light therefrom, a stereo camera to determine a distance up to the target object on the basis of image information from the target object, an object recognition unit which recognizes the target object on the basis of an output signal from the active range finder and an output signal from the stereo camera, and a fill light control unit which controls the floodlight unit to operate so as to irradiate a light floodlit by the floodlight unit as a fill light of the stereo camera.

US 2011/012510 A1 discloses an automotive headlamp apparatus comprising a lamp unit configured to be capable of forming an additional light distribution pattern that includes an upper area above the cut-off line of a light distribution pattern for low beam and that is divided into a plurality of individual patterns; and a controller configured to control formation of each of the individual patterns in accordance with presence of a forward vehicle. The controller reduces the illuminance of an individual pattern overlapping an area where a forward vehicle is present and increases the illuminance of at least one of other individual patterns.

SUMMARY OF THE INVENTION

The present invention is set out as in the appended claims.

## BRIEF DESCRIPTION OF THE DRAWINGS

Other objects, features and advantages of the present invention will become more apparent from the following detailed description when read in conjunction with the accompanying drawings, in which:

FIG. 1 is a plan view of a vehicle provided with a movable body control system according to an embodiment of the present invention;

FIG. 2A is a side view of the vehicle provided with the movable body control system and FIG. 2B is a front view of the vehicle provided with the movable body control system;

FIG. 3 is a perspective view of a stereo camera of the movable body control system;

FIG. 4 illustrates an example of a random patterned light;

FIG. 5 is a hardware block diagram of the movable body control system;

FIG. 6 is for describing a parallax image generating unit of an image processing unit;

FIG. 7 is for describing a case of eight directions of propagation;

FIG. 8 is for describing a decimal parallax by sub-pixel estimation;

FIG. 9 is for describing the principle of deriving the distance from the stereo camera to an object;

FIG. 10A illustrates a reference image, FIG. 10B illustrates a high-density parallax image with respect to FIG. 10A, and FIG. 10C is a conceptual diagram indicating an edge parallax image with respect to FIG. 10A;

FIG. 11A is a conceptual diagram of a reference pixel in the reference image, and FIG. 11B is a conceptual diagram of the calculation of the shift amount while sequentially shifting the candidate corresponding pixel in the comparative image with respect to the reference image of FIG. 11A;

FIG. 12 is a graph indicating the cost value of each shift amount;

FIG. 13 is a conceptual diagram of deriving a synthesis cost value;

FIG. 14 is a graph of synthesis cost values of the respective parallax values;

FIG. 15 is a flowchart of a vehicle control process performed by the movable body control system according to an embodiment;

FIG. 16 is a flowchart of a light projection control process 1 performed by an object detection device according to an embodiment;

FIG. 17 is a flowchart of a light projection control process 2 performed by the object detection device according to modified example 1;

FIG. 18 is a hardware block diagram of the movable body control system according to modified example 2;

FIG. 19 is a flowchart of a light projection control process 3 performed by the object detection device according to modified example 2;

FIG. 20 is a flowchart of a light projection control process 4 performed by the object detection device according to modified example 3;

FIGS. 21A and 21B depict a method of calculating a texture amount;

FIG. 22 is a flowchart of a light projection control process 5 performed by the object detection device according to modified example 4;

FIG. 23 is a flowchart of a light projection control process 6 performed by the object detection device according to modified example 5; and

FIG. 24 is a flowchart of a light projection control process 7 performed by the object detection device according to modified example 6.

## DETAILED DESCRIPTION OF THE PREFERRED EMBODIMENTS

Embodiments will be described with reference to the accompanying drawings.

[Overview]

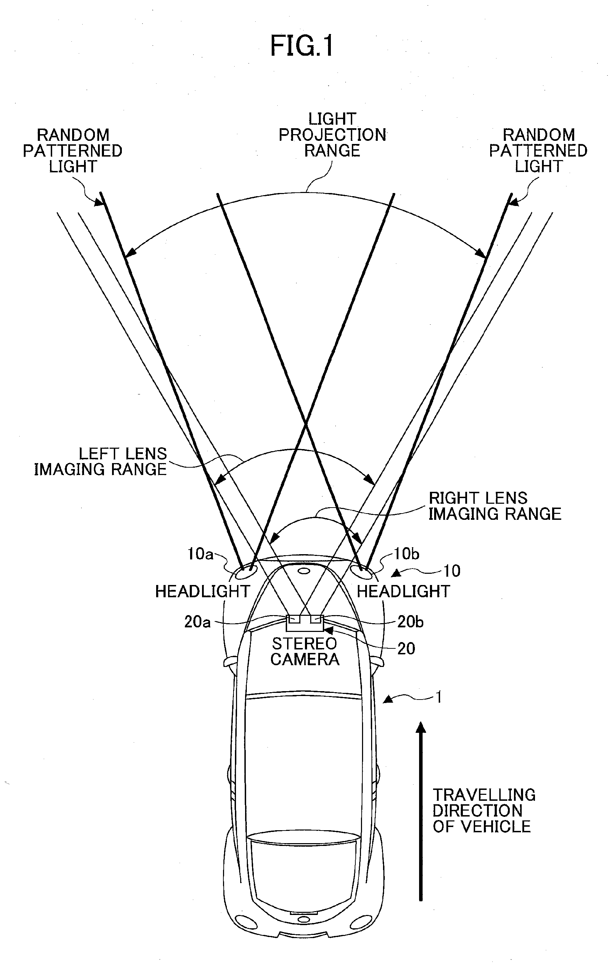

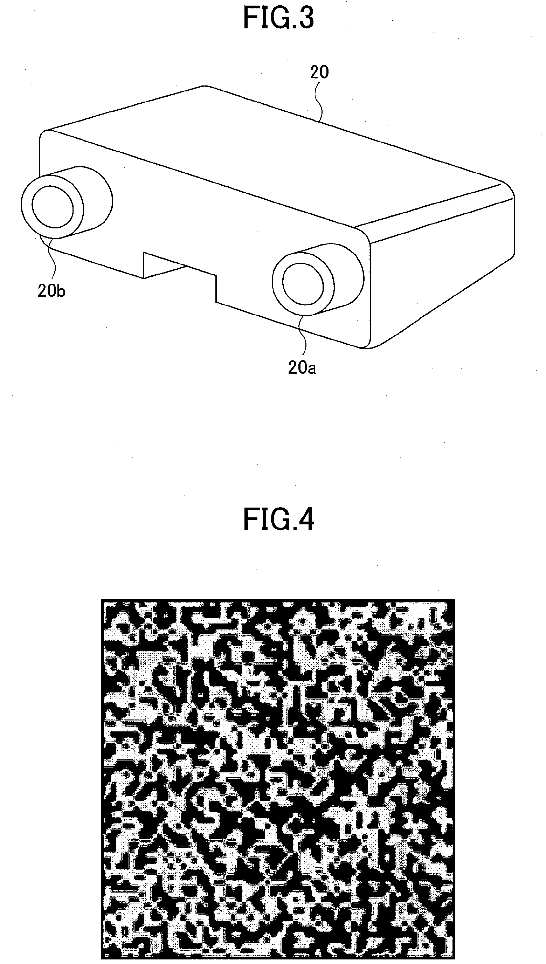

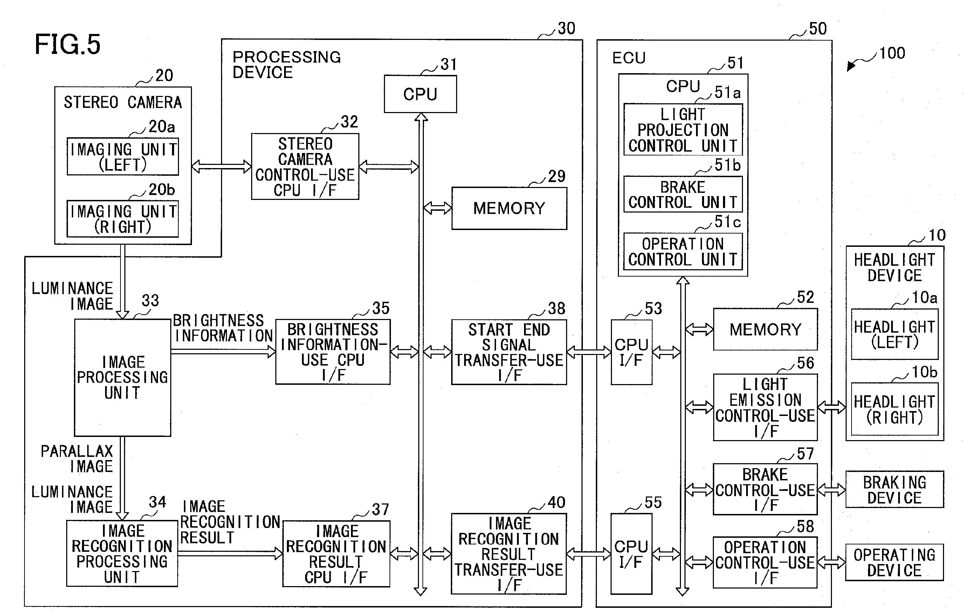

A movable body control system 100 according to an embodiment is installed in a vehicle main body (movable body) of a vehicle 1 that is a movable body device, and includes a headlight device 10, a stereo camera 20 that is an imaging device (see FIG. 3), a processing device 30 (see FIG. 5), an ECU 50 that is an electronic control device (see FIG. 5), etc., as illustrated in FIGS. 1 through 2B. Here, the movable body control system 100 is supplied with power from a battery of the electrical system of the vehicle 1.

Note that examples of the vehicle main unit, which is a movable body, are an automobile, an electric train, a motor cycle, a bicycle, a wheelchair, a cultivator used for agriculture, etc. Furthermore, the movable body device including the movable body control system 100 and the movable body in which the movable body control system 100 is installed, is not limited to a vehicle; for example, the movable body device may be an airplane, a ship, etc.

The headlight device 10 includes a pair of left and right headlights 10a, 10b, which are provided at the front part of the vehicle main body. The headlights 10a, 10b are turned on or off at the same time. Here, the headlights 10a, 10b are included as standard equipment in the vehicle 1. In the following, when there is no need to distinguish between the headlight 10a and the headlight 10b, these are collectively referred to as a "headlight".

Each headlight includes, as a light source, an LED array in which a plurality of LEDs are arranged in an array, and a driving circuit for driving the LED array. Each headlight is controlled to be turned on or off by the ECU 50. Furthermore, the headlight can also be turned on and off by manually operating a headlight switch provided near the steering wheel of the vehicle 1. Note that the headlight may include, for example, a white light source as the light source, instead of the LED.

The light is projected from the headlight at the front of the vehicle, and when there is an object within the light projection range of the headlight device 10, the object is irradiated with the light. Here, the "light projection range" means the range (see FIG. 1) obtained by combining the ranges in which light can be projected from the respective headlights of the headlight device 10.

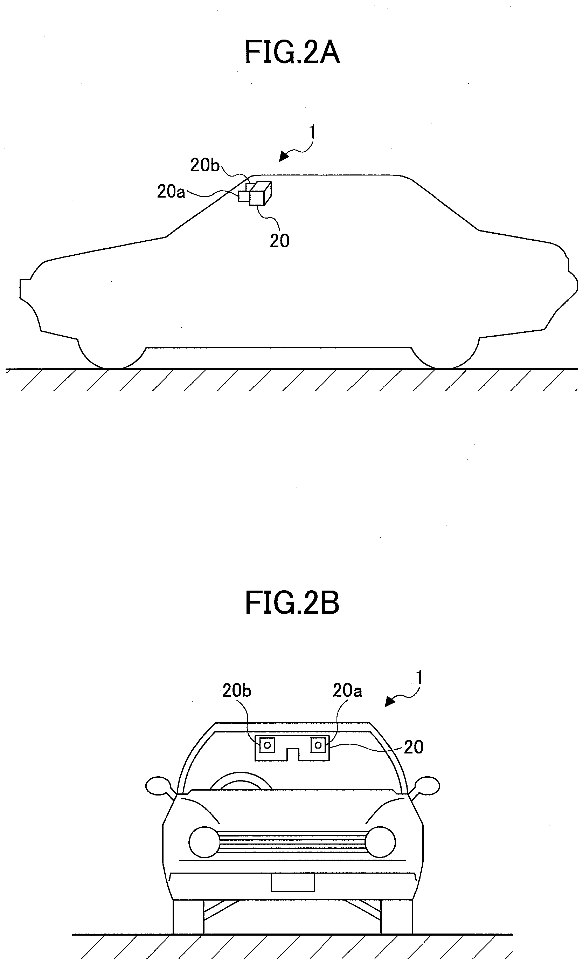

The stereo camera 20 is, for example, attached near the rear-view mirror, above the driver's seat inside the vehicle, as illustrated in FIGS. 2A and 2B. The stereo camera 20 is disposed so as to capture images in front of the vehicle with both lenses (left and right imaging units 20a, 20b). That is, the stereo camera 20 can capture images of an area within the light projection range of the headlight device 10. The left and right images (luminance images) captured with both lenses of the stereo camera 20 are sent to the processing device 30 in units of frames. The processing device 30 performs parallax calculation by using the left and right images from the stereo camera 20.

When the headlight device 10 is projecting light, an object (for example, a person, another vehicle, a structural object, a road, a tree, etc.) in the light projection range is irradiated with patterned light, and therefore the patterns of the patterned light are superimposed on (a texture is applied to) the object in the left and right images captured both lenses of the stereo camera 20.

As illustrated in FIG. 5, the processing device 30 includes a CPU 31, a memory 29, a stereo camera control-use CPU I/F 32, an image processing unit 33, an image recognition processing unit 34, a brightness information-use CPU I/F 35, an image recognition result CPU I/F 37, a start end signal transfer-use I/F 38, and an image recognition result transfer-use I/F 40.

The stereo camera control-use CPU I/F 32 is an interface used for transmitting and receiving data between the CPU 31 and the stereo camera 20. The CPU 31 implements imaging control of the stereo camera 20 via the stereo camera control-use CPU I/F 32.

The CPU 31 and the ECU 50 can transmit and receive data with each other via the start end signal transfer-use I/F 38.

The image processing unit 33 calculates brightness information from the left and right images (luminance images) from the stereo camera 20, and sends the brightness information to the CPU 31 via the brightness information-use CPU I/F 35. The CPU 31 sends the received brightness information to the ECU 50 via the brightness information-use CPU I/F 35.

Furthermore, the image processing unit 33 performs gamma correction and distortion correction on the left and right images captured by the stereo camera 20, and subsequently performs parallax calculation with the use of the left and right images (luminance images), and sends a parallax image and a luminance images to the image recognition processing unit 34.

The image recognition processing unit 34 recognizes (detects) object information, such as whether there is an object, the type of the object, the distance to the object, etc., based on the parallax image and the luminance images from the image processing unit 33, and sends an image recognition result, which is the result of the recognition, to the CPU 31 via the image recognition result CPU I/F 37. The CPU 31 sends the received image recognition result to the ECU 50 via the image recognition result transfer-use I/F 40.

That is, the processing results obtained at the image processing unit 33 and the image recognition processing unit 34 are sent to the CPU 31 of the processing device 30, corrected to have a data format that can be received by the ECU 50, and subsequently transferred to the ECU 50. Examples of the data format transferred to the ECU 50 are mainly CAN I/F, LIN I/F, etc.

The ECU 50 controls the headlight according to operations (ON/OFF) of the headlight switch by the driver, etc., and controls the braking device and the operating device of the vehicle 1, in addition to the headlight device 10, based on process information from the processing device 30.

The ECU 50 includes a CPU 51, a memory 52, a CPU I/F 53, a CPU I/F 55, a light emission control-use I/F 56, a brake control-use I/F 57, and an operation control-use I/F 58.

The CPU 51 includes a light projection control unit 51a for controlling the headlight device 10, a brake control unit 51b for controlling the braking device, and an operation control unit 51c for controlling the operating device.

The CPU 51 acquires brightness information from the CPU 31, via the start end signal transfer-use I/F 38 and the CPU I/F 53.

Furthermore, the CPU 51 acquires the image recognition result from the CPU 31 via the image recognition result transfer-use I/F 40 and the CPU I/F 55.

The brake control unit 51b and the operation control unit 51c acquires the image recognition result from the CPU 31, via the image recognition result transfer-use I/F 40 and the CPU I/F 55.

The brake control unit 51b implements control of the braking device (for example, automatic braking for avoiding danger), based on the acquired image recognition result.

The operation control unit 51c implements control of the operating device (for example, automatic steering for avoiding danger), based on the acquired image recognition result.

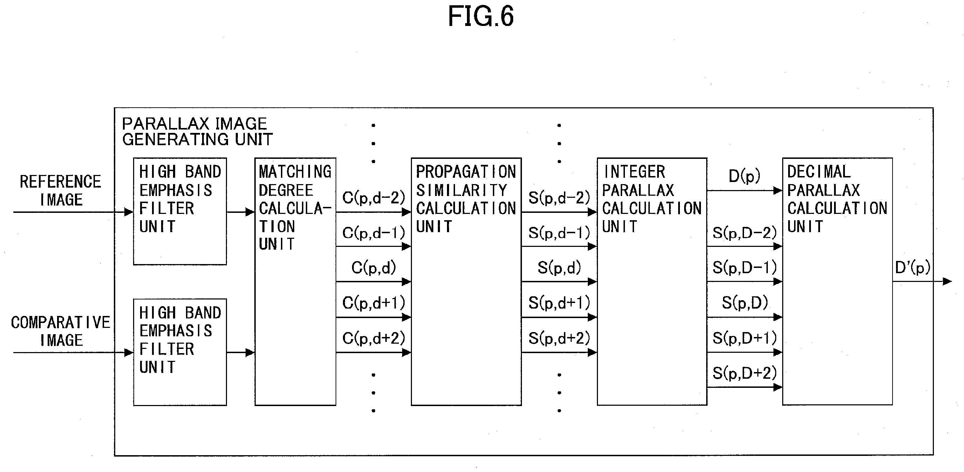

Next, a parallax calculation algorithm using the images captured by the stereo camera 20 is described with reference to FIGS. 6 through 8.

The image data items captured by the left and right imaging units of the stereo camera 20 are respectively subjected to gamma correction and distortion correction at a pre-processing unit of the image processing unit 33. On the left and right image data items that have undergone pre-processing, a parallax calculation algorithm is executed, at a parallax image generating unit (see FIG. 6), which is a post-processing unit of the image processing unit 33, and a parallax value is calculated for each of the pixels.

Incidentally, as a calculation method of generating a parallax image, a method may be used in which only the parallax for a part where texture is strong (a part where edge is strong) is calculated, such as Edge-Based matching (EBM). Alternatively, a method may be used in which the parallax of each of the pixels in the entire image is calculated by using a sub-pixel estimation method (fitting based on equal angle straight line, parabola, high-degree polynomial, etc.). Further, a method may be used in which the parallax of each of the pixels in the entire captured image is calculated by using a sub-pixel estimation method (fitting based on equal angle straight line, parabola, high-degree polynomial, etc.). Here, the term "sub-pixel estimation method" refers to a method of calculating decimal parallax based on integer parallax, which provides the minimum dissimilarity, and a parallax dissimilarity adjacent to the integer parallax, by propagating a matching dissimilarity from around each pixel by a recurrence formula like Semi-Global Matching (SGM).

Compared to EBM, SGM is preferable, because it is possible to suppress pixel defects in the parallax data.

Accordingly, the parallax image generating unit according to the present embodiment uses an SGM method, and for example, as illustrated in FIG. 6, the parallax image generating unit includes a high band emphasis filter unit with respect to a reference image, a high band emphasis filter unit with respect to a comparative image, a matching degree calculation unit, a propagation similarity calculation unit, an integer parallax calculation unit, and a decimal parallax calculation unit. Note that the SGM method is disclosed in non-patent document (Accurate and Efficient Stereo Processing by Semi-Global Matching and Mutual Information).

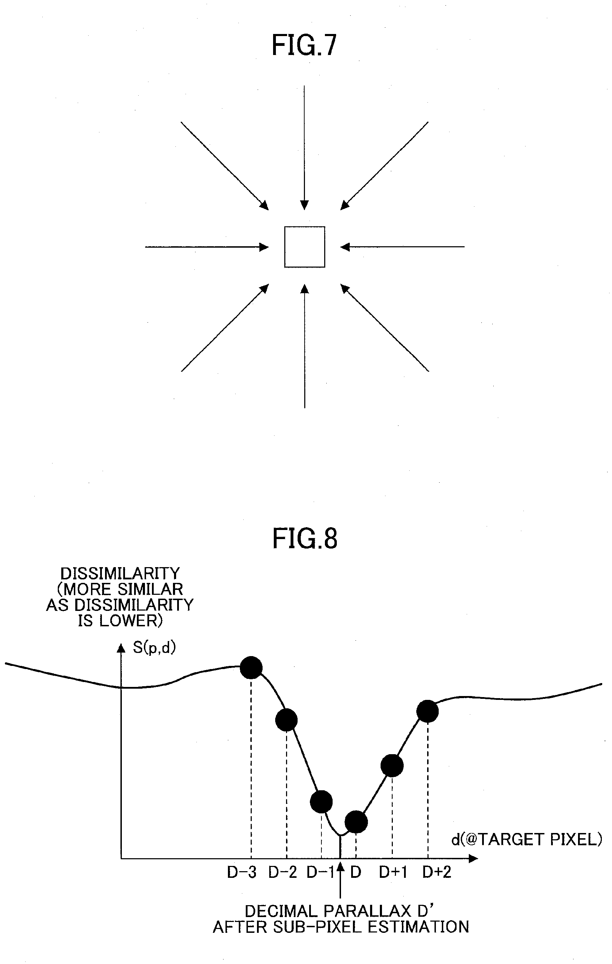

In the following, a parallax image generating unit according to the present embodiment is described. In SGM parallax calculation, as illustrated in FIG. 7, the dissimilarity is propagated from the respective directions of a target pixel for which the parallax is to be calculated (see formula (1) or formula (2)), and energy S, which is the sum of these dissimilarities (see formula (3)) is calculated, and an integer parallax D [pixel] that applies the minimum value of energy S is derived as the integer parallax of the target pixel. Here, C, which is expressed by formula (1) and formula (2), expresses the matching degree according to parallax searching in a comparative image for the target pixel of the reference image. As an example of C, another stereo matching index may be used, such as SAD, SSD, NCC, etc. After calculating C, Lr is calculated by formula (1) or formula (2), and lastly, S is calculated by formula (3). By increasing the number of directions of propagation, the parallax calculation precision increases; however, the calculation processing circuit scale increases (the parallax calculation precision and the processing circuit scale have a tradeoff relationship).

In order to further pursue parallax precision, as illustrated in FIG. 8, a sub-pixel estimation method is used to calculate the decimal parallax. For example, in an equal angle straight line method, three S values corresponding to a parallax D-1, D, and D+1, are used to calculate a decimal parallax D'. Alternatively, in the parabola fitting method, five S values corresponding to a parallax D-2, D-1, D, D+1, D+2 are used to calculate a decimal parallax D'.

Note that a reliability determination is made to determine whether the calculated parallax value is reliable. When it is determined that the parallax value is unreliable, the parallax of the corresponding pixel is assumed to be an invalid parallax.

$$L_r'(\mathrm{p},d) = C(\mathrm{p},d) + \min\left( L_r'(\mathrm{p}-\mathrm{r},d), \right.$$
$$L_r'(\mathrm{p}-\mathrm{r},d-1) + P_1, L_r'(\mathrm{p}-\mathrm{r},d+1) + P_1,$$
$$\left. \min_i L_r'(\mathrm{p}-\mathrm{r},i) + P_2 \right).$$

$$\cdots (1)$$

L'r : PROPAGATION SIMILARITY

$$L_r(\mathrm{p},d) = C(\mathrm{p},d) + \min\big(L_r(\mathrm{p}-\mathrm{r},d),$$
$$L_r(\mathrm{p}-\mathrm{r},d-1) + P_1, L_r(\mathrm{p}-\mathrm{r},d+1) + P_1,$$
$$\min_i L_r(\mathrm{p}-\mathrm{r},i) + P_2\big) - \min_k L_r(\mathrm{p}-\mathrm{r},k)$$

$$\cdots (2)$$

Lr : PROPAGATION SIMILARITY

$$S(\mathrm{p},d) = \sum_r L_r(\mathrm{p},d)$$

$$\cdots (3)$$

S : ENERGY CALCULATED BY THE SUM OF PROPAGATION SIMILARITIES PROPAGATED FROM THE RESPECTIVE DIRECTIONS

<Principle of ranging>

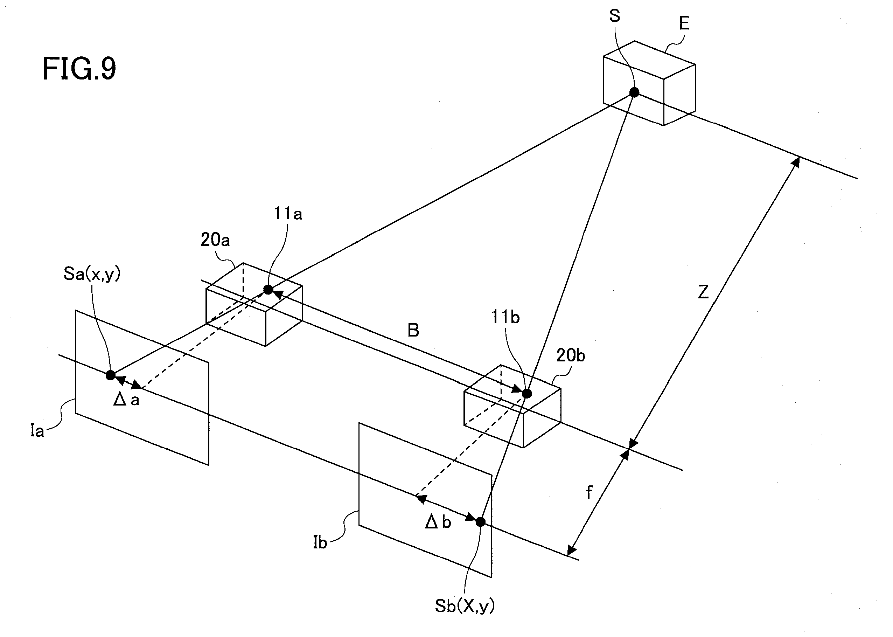

With reference to FIG. 9, the principle of a stereo image method, in which the parallax from the stereo camera to the object is derived, and a parallax value indicative of the parallax is used to measure the distance from the stereo camera to the object, is described. Note that FIG. 9 is a diagram for describing the principle of deriving the distance from the stereo camera 20 to an object. Furthermore, in the following, in order to simplify the description, a description is given in units of one pixel, instead of a predetermined area including a plurality of pixels.

Note that when a process is performed in units of a predetermined area including a plurality of pixels, instead of performing the process in units of one pixel, the predetermined area including the reference pixel is referred to as a reference area, and a predetermined area including a corresponding pixel is referred to as a corresponding area. Furthermore, there may be cases where the reference area includes only the reference pixel, and the corresponding area includes only the corresponding pixel

(Calculation of parallax value)

First, the images captured by the imaging unit 20a and the imaging unit 20b, illustrated in FIG. 9, are respectively referred to as a reference image Ia and a comparative image Ib. Note that in FIG. 9, it is assumed that the imaging unit 20a and the imaging unit 20b are disposed horizontally in parallel and at equal heights. In FIG. 9, the S point on the object E in a three-dimensional space is mapped at a position on the same horizontal line as the imaging unit 20a and the imaging unit 20b. That is, the S point in each image is captured at a point Sa (x, y) in the reference image Ia and at a point Sb (X, y) in the comparative image Ib. In this case, a parallax value $\Delta$ is expressed by the following formula (4), by using Sa (x, y) at coordinates of the imaging unit 20a and Sb (X, y) at coordinates of the imaging unit 20b.

$$\Delta = X - x \quad \dots (4)$$

Here, in the case of FIG. 9, the parallax value $\Delta$ is obtained as $\Delta = \Delta a + \Delta b$, where $\Delta a$ is the distance between the point Sa (x, y) in the reference image Ia and the intersection point of a perpendicular line from an imaging lens 11a and the image surface, $\Delta b$ is the distance between the point Sb (X, y) in the comparative image Ib and the intersection point of a perpendicular line from an imaging lens 11b and the image surface.

(Calculation of distance)

Furthermore, by using the parallax value $\Delta$, it is possible to derive the distance Z between the object E and the respective imaging units 20a, 20b. Specifically, the distance Z is the distance between a plane, which includes the focal position of the imaging lens 11a and the focal position of the imaging lens 11b, and a specified point S on the object E. As illustrated in FIG. 9, it is possible to calculate the distance Z by the formula (5), by using the focal length f of the imaging lens 11a and the imaging lens 11b, the base line length B that is the length between the imaging lens 11a and the imaging lens 11b, and the parallax value $\Delta$.

$$Z=(B\times f)/\Delta \quad \dots (5)$$

According to this formula (5), the higher the parallax value $\Delta$, the shorter the distance Z, and the lower the parallax value $\Delta$, the longer the distance Z.

<SGM method>

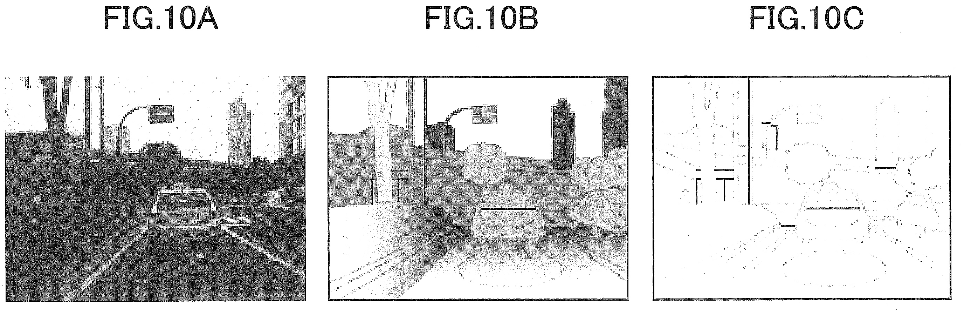

Next, a ranging method using the SGM method is described with reference to FIGS. 10A through 14. Note that FIG. 10A illustrates a reference image, FIG. 10B illustrates a high-density parallax image with respect to FIG. 10A, and FIG. 10C is a conceptual diagram indicating an edge parallax image with respect to FIG. 10A.

Here, a reference image is an image in which the object is indicated by the luminance. A high-density parallax image is an image that is derived from the reference image by the SGM method, and which indicates the parallax values at the respective coordinates in the reference image. The edge parallax image is an image derived by a block matching method used conventionally, and is an image that indicates the parallax values only at the parts where the texture is relatively strong, such as the edge parts, in the reference image.

The SGM method is a method of appropriately deriving the above parallax value with respect to an object having weak texture. For example, the SGM method is a method of deriving the high-density parallax image illustrated in FIG. 10B, based on the reference image illustrated in FIG. 10A. Note that when a block matching method is used, the edge parallax image illustrated in FIG. 10C is derived, based on the reference image illustrated in FIG. 10A. As can be seen by comparing the part surrounded by a dashed-line oval in FIG. 10B and FIG. 10C, in the high-density parallax image, detailed information such as a road, etc., having weak texture can be expressed more clearly than in the edge parallax image, and therefore more detailed distance measurement can be performed with the high-density parallax image.

In the SGM method, the parallax value is not immediately derived after calculating the cost value that is the dissimilarity; instead, after calculating the cost value, a synthesis cost value, which is the synthesis dissimilarity, is calculated to derive the parallax value, and finally, a parallax image (here, a high-density parallax image) indicating the parallax values of all pixels, is derived. Note that the block matching method is the same as the SGM method in terms of calculating the cost value; however, instead of calculating the cost value as in the SGM method, in block matching, only the parallax values of the parts having relatively strong texture such as the edge parts, are derived.

(Calculation of cost value)

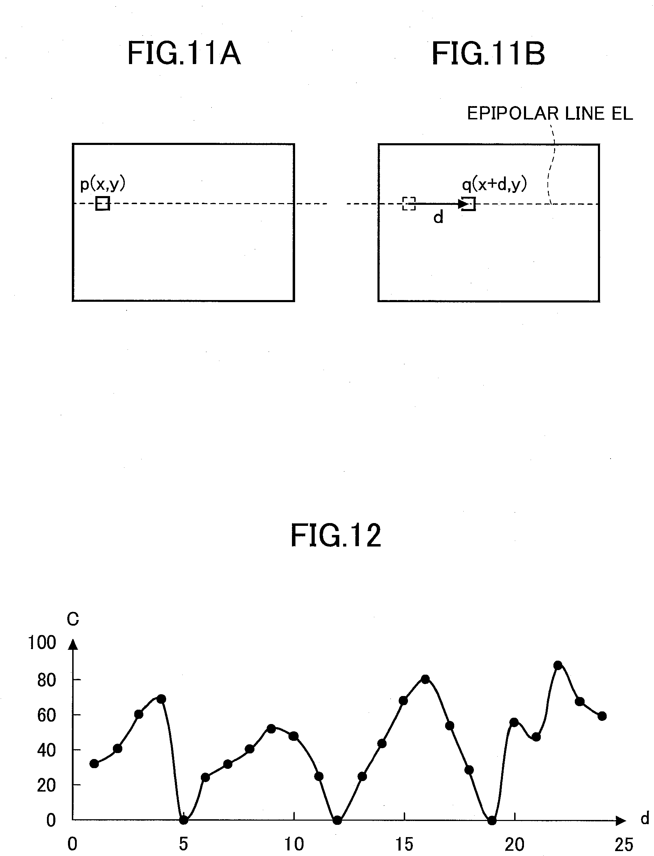

First, a method of calculating the cost value C (p, d) is described with reference to FIGS. 11A through 12. FIG. 11A is a conceptual diagram of a reference pixel in the reference image, and FIG. 11B is a conceptual diagram of the calculation of the shift amount while sequentially shifting the candidate corresponding pixel in the comparative image with respect to the reference image of FIG. 11A. FIG. 12 is a graph indicating the cost value of each shift amount. Here, a corresponding pixel is a pixel in the comparative image, which is most similar to the reference pixel in the reference image. Note that in the following description, it is assumed that C (p, d) expresses C (x, y, d).

As illustrated in FIGS. 11A and 11B, a cost value C (p, d) of each candidate corresponding pixel q (x+d, y) with respect to the reference pixel p (x, y) is calculated, based on the respective luminance values of a predetermined reference pixel p (x, y) in the reference image and a plurality of candidate corresponding pixels q (x+d, y) along an Epipolar line in the comparative image with respect to the reference pixel p (x, y). d is the shift amount of the candidate corresponding pixel q with respect to the reference pixel p, and in the present embodiment, the shift amount is expressed in units of pixels. That is, in FIGS. 11A and 11B, while sequentially shifting a candidate corresponding pixel q (x+d, y) by one pixel at a time within a range specified in advance (for example, 0<d<25), a cost value C (p, d), which is the dissimilarity in the luminance value between the candidate corresponding pixel q (x+d, y) and the reference pixel p (x, y), is calculated. As the method of calculating the cost value C, a publicly known method such as SAD (Sum of Absolute Difference), etc., is applied, when the cost value C indicates the dissimilarity.

The cost value Cs (p, d) calculated as above, can be expressed by a graph of a cost curve that is an assembly of cost values C of the respective shift amounts d, as illustrated in FIG. 12. In FIG. 12, the cost value C is zero when the shift amounts are d=5, 12, 19, and therefore a minimum value cannot be obtained. Accordingly, in the case of an object having weak texture, it is difficult to obtain the minimum value of the cost value C.

(Calculation of synthesis cost value)

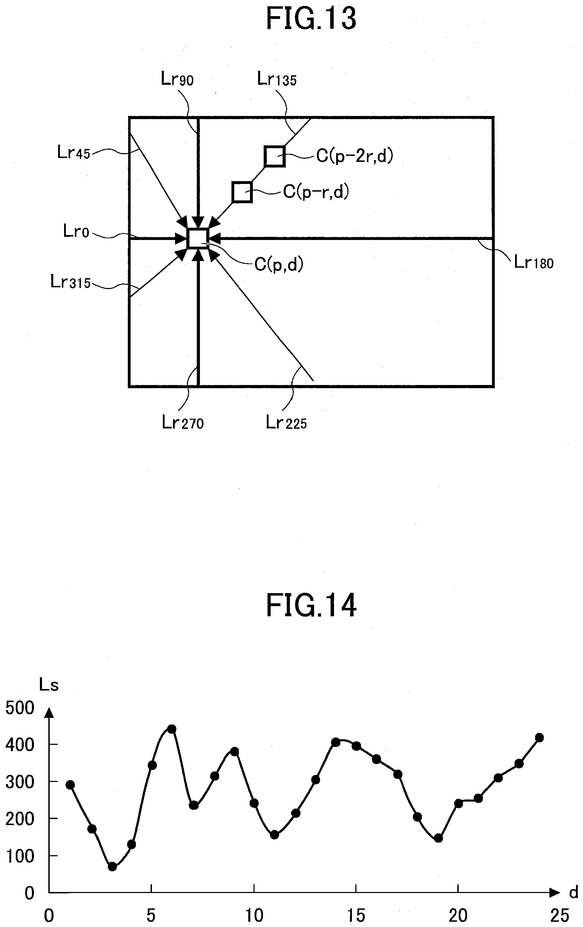

Next, a method of calculating a synthesis cost value Ls (p, d) is described with reference to FIGS. 13 and 14. FIG. 13 is a conceptual diagram of deriving the synthesis cost value. FIG. 14 is a graph of a synthesis cost curve indicating the synthesis cost values of the respective parallax values. The method of calculating the synthesis cost value according to the present embodiment is not only for calculating the cost value C (p, d); this method is also for calculating the synthesis cost value Ls (p, d) by integrating the cost value when a pixel around a predetermined reference pixel p (x, y) is the reference pixel, with the cost value C (p, d) at the reference pixel p (x, y).

Next, a more detailed description is given of the method calculating the synthesis cost value. In order to calculate the synthesis cost value Ls (p, d), first, a route cost value Lr (p, d) needs to be calculated. The formula (6) below is a formula for calculating the route cost value Lr (p, d), and is substantially the same as the above formula (1). The formula (7) below is a formula for calculating the synthesis cost value Ls, and is substantially the same as the above formula (3).

$$Lr(p,d)=C(p,d)+\min\{(Lr(p-r,d),Lr(p-r,d-1)+P1,Lr(p-r,d+1)+P1,Lrmin(p-r)+p2\} \quad \ldots(6)$$

Here, in formula (6), r indicates a direction vector in the integration direction, and includes two components of the x direction and the y direction. min{} is a function for obtaining the minimum value. Lrmin(p-r) indicate the minimum value of Lr(p-r, d) when the shift amount d is changed, at the coordinates to which p is shifted by one pixel in the r direction. Note that Lr is recursively applied as indicated in formula (6). Furthermore, P1 and P2 are fixed parameters defined in advance by experiments; these parameters are set such that the parallax values $\Delta$ of adjacent reference pixels along the route become continuous. For example, P1=48 and P2=96.

Furthermore, as indicated in formula (6), Lr (p, d) is obtained by adding the minimum value of the route cost values Lr of the respective pixels in the r direction illustrated in FIG. 13, to the cost value C at the reference pixel p (x, y). As described above, Lr of each pixel in the r direction is obtained, and therefore Lr is first obtained from the pixel at the very end in the r direction of the reference pixel p (x, y), and the Lr is obtained for subsequent pixels along the r direction.

Then, as illustrated in FIG. 13, $Lr_0$, $Lr_{45}$, $Lr_{90}$, $Lr_{135}$, $Lr_{180}$, $Lr_{225}$, $Lr_{270}$, $Lr_{315}$ of eight directions are obtained, and finally, the synthesis cost value Ls is obtained based on formula (7).

$$L_S(p,d)=\sum_8 L_r \quad \cdots (7)$$

The synthesis cost value Ls (p, d) calculated as described above can be expressed by a graph of a synthesis cost curve, in which the synthesis cost value Ls (p, d) is indicated for each shift amount d, as illustrated in FIG. 14. In FIG. 14, the synthesis cost value Ls is minimum in the case of the shift amount d=3, and therefore this is calculated as a parallax value $\Delta$=3. Note that in the above description, the number of r values is eight; however, the present embodiment is not so limited. For example, the eight directions may be further divided by two to obtain 16 directions, the eight directions may be further divided by three to obtain 24 directions, etc. Furthermore, the cost value C is indicated as the "dissimilarity"; however, the cost value C may be expressed as a "similarity" that is the inverse number of the dissimilarity. In this case, as the method of calculating the cost value C, a publicly known method such as NCC (Normalized Cross Correlation), etc., is applied. Furthermore, in this case, a parallax value $\Delta$ is derived, such that the synthesis cost value Ls is not minimum but "maximum". Note that both the dissimilarity and the similarity may be inclusively expressed as a "matching degree".

Note that part of the process by the processing device may be executed by the ECU, and part of the process by the ECU may be executed by the processing device. Furthermore, there may be a single control system including the functions of both the processing device and the ECU. In this case, the object detection program and the movable body control program may be stored in a single memory.

Furthermore, instead of a memory, another storage medium may be used, such as a hard disk, etc.

Furthermore, the control targets of the movable body control system are the braking device and the operating device of the vehicle; however, the present embodiment is not so limited. For example, the control target may be either one of the braking device or the operating device, and the driving source of the vehicle (for example, the engine and the motor) may be included as at least one of the control targets.

Furthermore, the movable body control system includes a brake control unit and an operation control unit for controlling the vehicle main body; however, instead of or in addition to these units, an alert device may be included for outputting an alert sound or an alert display for prompting the attention of the driver, etc., based on detection information of an object detection device described below.

Furthermore, a random patterned light is projected by turning on the LED array according to a light emitting pattern having an irregular light amount distribution; however, instead of the random patterned light, for example, a "design" represented by a projection mapping video, may be projected in front of the automobile. That is, the light projection device may include an image forming unit for forming an image by light, and emitting the formed light image as a random patterned light. Furthermore, the light projection device may generate and project a random patterned light by emitting light forming a mask pattern having an irregular pattern distribution.

Furthermore, a headlight device is used as the light source unit of the light projection device; however, another exclusive-use light source unit may be provided separately from the headlight device. Furthermore, the headlight device is not limited to a device included as standard equipment in the vehicle main body; the headlight device may be a custom-made article or an optional article.

Furthermore, as the imaging device, a stereo camera 20 including two imaging units (two lenses) is used; however, an imaging device including three or more imaging units may be used.

[Details]

The above-described light projection control unit 51a turns on the headlight of the headlight device 10 and projects a random patterned light, by using light pattern data (of the light to be emitted) stored in the memory 52, according to the acquired brightness information.

The "light projection device" for projecting a random patterned light is formed of the headlight device 10 and the light projection control unit 51a. Furthermore, the "imaging system" for capturing the light projection range of the light projection device is formed of the light projection device and the stereo camera 20. Furthermore, the "object detection device" for detecting the object information of the light projection range of the light projection device is formed of the imaging system and the image processing system including the image processing unit 33.

If the ECU 50 determines that the outside of the vehicle is "dark" while the headlight is turned off, the ECU 50 turns on the headlight, and if the ECU 50 determines that the outside of the vehicle is "bright" while the headlight is turned on, the ECU 50 turns off the headlight.

Specifically, if the ECU 50 determines that the outside of the vehicle is "dark" while the headlight is turned off, based on a detection result from a brightness information detection unit for detecting the brightness information outside the vehicle, the ECU 50 turns on the headlight by using the light pattern data, and projects a patterned light from the headlight. Note that when the driving circuit of the headlight receives the light pattern data, the driving circuit of the headlight drives the respective LEDs in the LED array according to a current value set for each LED in the light pattern data.

Specifically, the light pattern data is stored in the memory 52 (see FIG. 5) of the ECU 50. The CPU 51 (see FIG. 5) of the ECU 50 reads the light pattern data from the memory 52 when projecting light, and drives the LED array of each headlight according to the light pattern data.

Furthermore, if the ECU 50 determines that the outside of the vehicle has become bright while the headlight is turned on, based on a detection result from the brightness information detection unit, the ECU 50 turns off the headlight.

When there is an object in the light projection range, the object is irradiated by the patterned light that is projected from the headlight at the front of the vehicle. Here, the "light projection range" means the range (see FIG. 1) obtained by combining the ranges in which light can be projected from the respective headlights.

The brightness information detection unit is formed of the stereo camera 20 and the image processing unit 33 described below for processing images captured by the stereo camera 20; however, for example, the brightness information detection unit may be formed by using a combination of a monocular camera and an image processing unit, or an illuminance sensor. That is, when the brightness information detection unit is formed of the stereo camera 20 and the image processing unit 33, the image processing unit 33 determines that the outside is "dark" when the total value of the luminance of all pixels in the image is less than a threshold. Furthermore, when the brightness information detection unit is an illuminance sensor, the brightness information detection unit determines that the outside is "dark" when the value acquired by the sensor is less than the threshold. As a matter of course, the method of detecting the brightness by the brightness information detection unit may have various modes, as long as the brightness outside the vehicle can be acquired. The detection result of the brightness information detection unit is sent to the ECU 50.

Here, the "light pattern data" is data having an irregular light amount distribution (current value distribution), and the corresponding "patterned light" has an irregular luminance distribution (see FIG. 4). Therefore, in the following, the "patterned light" is also referred to as "random patterned light".

In the random patterned light, binary or multivalued (ternary or more) luminance parts are distributed in an irregular manner (see FIG. 4).

For example, when the light amount distribution of the light pattern data has binary light amount parts distributed in an irregular manner, the random patterned light has a corresponding distribution with binary luminance parts distributed in an irregular manner.

For example, when the light amount distribution of the light pattern data has multivalued light amount parts distributed in an irregular manner, the random patterned light has a corresponding distribution with multivalued luminance parts distributed in an irregular manner.

Here, for example, a plurality of light pattern data items having the same design but different contrasts (in the following, abbreviated as "a plurality of light pattern data items having different contrasts") may be stored in the memory 52 of the ECU 50. The plurality of light pattern data items having different contrasts may be obtained by uniformly increasing or decreasing the light amount values of all light amount parts with respect to the light pattern data used as the reference.

In this case, the ECU 50 preferably selects an appropriate light pattern data item from among the plurality of light pattern data items having different contrasts, based on the brightness outside the vehicle, other vehicles in front of the vehicle, whether there is an object such as an obstacle, the texture amount of the environment in front of the vehicle, the parallax reliability information of the parallax image, and uses the selected light pattern data item to turn on the LED array of each headlight.

An object presence detection unit for detecting whether there is an object in front of the vehicle, may be formed of the stereo camera 20 and the image processing unit 33; however, for example, the object presence detection unit may be formed by using a combination of a monocular camera or a polarization camera and an image processing unit, or a laser radar. Note that when a combination of a monocular camera and an image processing unit is used as a brightness detection unit, this combination may also be used as the object presence detection unit.

As a texture detection unit for detecting the texture amount in the environment in front of the vehicle, and a unit for acquiring the parallax reliability information of the parallax image, may be formed of the stereo camera 20 and the image processing unit 33.

When a plurality of light pattern data items having different contrasts are stored in the memory 52, the ECU 50 can selectively project, form each headlight, one of the plurality of light pattern data items having different contrasts, according to the brightness/darkness outside the vehicle and the environment in front of the vehicle.

Incidentally, when the vehicle is in a tunnel during daytime, or in a dark place during nighttime, the headlight projects light in front of the vehicle to make the dark place bright; however, the contrast of an object that is originally in a dark place is already low, and therefore it is difficult to attain an image contrast, simply by turning on the headlight and emitting uniform light. Therefore, in a dark place, it is difficult to attain matching (correlation) between the left and right images in calculating the parallax, when acquiring a parallax image in front of the vehicle with the stereo camera. As a result, the number of ineffective parallax pixels of a subject in front of the vehicle (a person, another vehicle, an obstacle, the road surface, the background, etc.) increases, and the precision in the output parallax is low.

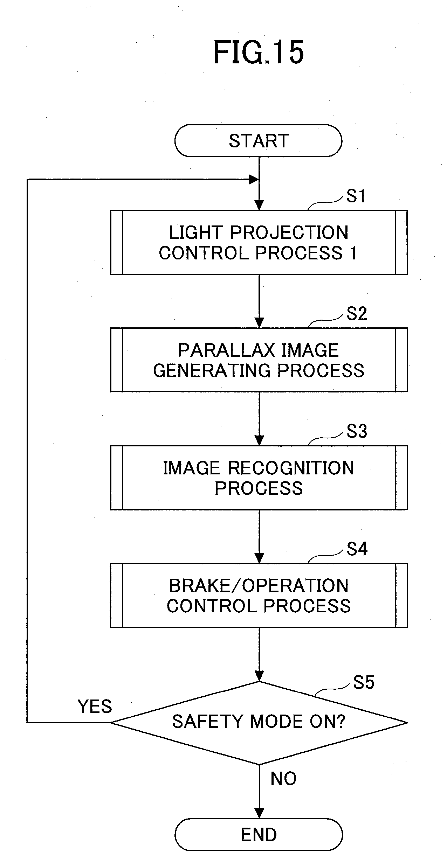

The control of the vehicle main body (vehicle control process) by the movable body control system 100 according to the present embodiment is described with reference to the flowchart of FIG. 15. This control is executed by the ECU 50 and the processing device 30. That is, in the movable body control program used for controlling the movable body control system 100, a sub program for operating the ECU 50 is stored in the memory 52 of the ECU 50, and a sub program for operating the processing device 30 is stored in the memory 29 of the processing device 30.

Note that the movable body control program includes all procedures of the object detection program used for controlling the object detection device. In the object detection program, a sub program for controlling the light projection device is stored in the memory 52 of the ECU 50, and a sub program for controlling the stereo camera 20 and the processing device 30 is stored in the memory 29 of the processing device 30.

Here, the control is implemented when the driver or a passenger (hereinafter, "driver, etc.") selects (ON) a safety mode (danger avoidance mode) at the operation unit of the vehicle 1. When the safety mode is selected (ON), the stereo camera 20 captures images with both lenses in real-time, and sends the left and right images to the image processing unit 33 in units of frames.

In the first step S1, the ECU 50 executes a "light projection control process 1". The "light projection control process 1" is described below.

In the next step S2, a "parallax image generating process" is executed. The "parallax image generating process" is executed by the processing device 30 in accordance with a sub program stored in the memory 29. Specifically, the processing device 30 generates a parallax image from images (luminance images) of the left and right frames captured by the stereo camera 20. More specifically, the image processing unit 33 performs a pre-process of gamma correction and distortion correction, and subsequently performs parallax calculation, and sends the luminance images that have undergone the pre-process and a parallax image obtained by the parallax calculation, to the image recognition processing unit 34.

In the next step S3, an "image recognition process" is executed. The "image recognition process" is executed by the processing device 30 in accordance with a sub program stored in the memory 29. Specifically, the processing device 30 performs image recognition (object recognition) by using a parallax image. More specifically, the image recognition processing unit 34 recognizes (detects) information (object information) relevant to an object in the light projection range, and sends the result (image recognition result) to the ECU 50. Note that "information relevant to an object" is, for example, whether there is an object, the distance to the object, the type of object (for example, a person, a structural object, a road, etc.), etc. Note that the detection of the type of object can be performed by storing parameters such as the size, the shape, etc., of a plurality of types of objects in the memory 29 in advance, and detecting an object based on the parameters.

In the next step S4, a "brake/operation control process" is executed. The brake/operation control process" is executed by the ECU 50 in accordance with a sub program stored in the memory 52. Specifically, the ECU 50 performs automatic braking and automatic steering (control for avoiding danger), based on the received image recognition result. More specifically, the brake control unit 51b and the operation control unit 51c appropriately control the braking device and the operating device, respectively, based on the image recognition result.

In the next step S5, the ECU 50 determines whether the safety mode is ON. If this determination is affirmative, the process returns to step S1, and if this determination is negative, the flow ends.

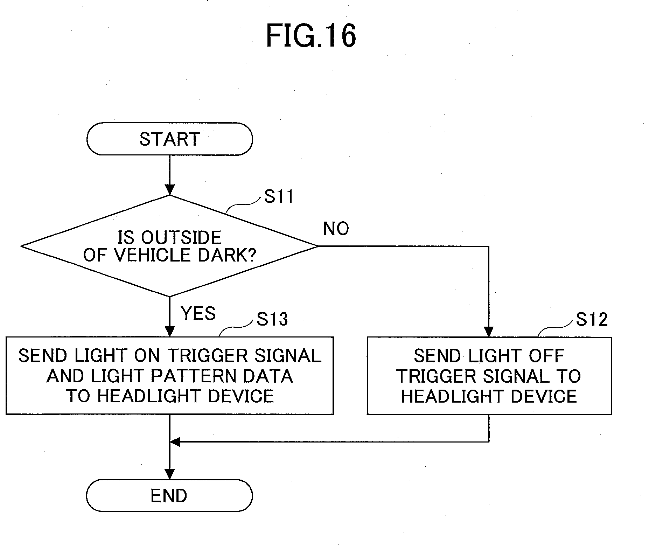

Next, the "light projection control process 1" in step S1 of the "vehicle control process" is described with reference to the flowchart of FIG. 16. The light projection control process 1 is executed by the light projection control unit 51a in accordance with a sub program stored in the memory 52. Here, the brightness information is calculated in real-time by the processing device 30 based on the images (luminance images) in front of the vehicle captured in real-time by the stereo camera 20, and the calculated brightness information is sent to the light projection control unit 51a in real-time.

In the first step S11, the light projection control unit 51a determines whether the outside of the vehicle is dark. Specifically, the light projection control unit 51a compares the brightness information from the processing device 30 with a reference value set in advance, and if the brightness information is less than the reference value, the light projection control unit 51a determines that the outside is "dark", and if the brightness information is greater than or equal to the reference value, the light projection control unit 51a determines that the outside is "not dark". If the determination in step S11 is negative (if it is determined as not dark), the process shifts to step S12, and if the determination in step S11 is affirmative (if it is determined as dark), the process shifts to step S13.

In step S12, the light projection control unit 51a sends a light off trigger signal to the headlight device 10. As a result, if the headlight is on, the headlight is turned off, and if the headlight is off, the off state is maintained. When step S12 is executed, the flow ends.

In step S13, the light projection control unit 51a sends a light on trigger signal and light pattern data to the headlight device 10. As a result, if the headlight is on, the on state is maintained, and if the headlight is off, the headlight is turned on, and a random patterned light is projected in front of the vehicle. At this time, the stereo camera 20 captures, with both lenses, the range in which the random patterned light is projected, and the captured left and right images are sent to the image processing unit 33 in units of frames. When step S13 is executed, the flow ends.

Note that if the safety mode is ON in the vehicle control process including the light projection control process 1, the headlight is automatically turned on when the brightness outside the vehicle is less than the reference value, and the headlight is not turned on when the brightness outside the vehicle is greater than or equal to the reference value. These automatic operations are prioritized over a manual operation of the headlight switch by the driver, etc. Meanwhile, if the safety mode is OFF, the headlight is turned on or off only by the manual operation of the headlight switch by the driver, etc.

The imaging system according to the present embodiment described above, is an imaging system installed in a vehicle main body (movable body), and includes a light projection device including the headlight device 10 and the light projection control unit 51a which projects a random patterned light (a light having an irregular luminance distribution), and the stereo camera 20 (imaging device) including two imaging units 20a, 20b that capture the light projection range of the light projection device.

In this case, the light projection range (range in which the random patterned light is projected) can be captured by the stereo camera 20, and therefore it is possible to obtain an effective image for detecting object information with respect to dark places.

Furthermore, the light projection device includes, as a light source unit, the headlight device 10 included as standard equipment in the vehicle main body for projecting a random patterned light. In this case, the random patterned light acts as illumination light for illuminating the dark places, and also as light that is effective for calculating the parallax. That is, there is no need to provide a separate light source unit in addition to the headlight device 10.

Furthermore, the object detection device according to the present embodiment includes the imaging system and the processing device 30 which is installed in the vehicle main body and processes images captured by the stereo camera 20 of the imaging system.

In this case, object information can be detected with high precision, based on the images (left and right images) effective for detecting the object information with respect to dark places obtained by the imaging system.

As a result, for example, the precision in matching the left and right images in the light projection range can be increased, and the parallax of the object in the light projection range can be calculated with high precision.

That is, a texture is applied to an object in a dark place where the contrast is initially low, and therefore a contrast appears in the image acquired by the left and right imaging units of the stereo camera 20, the precision in matching the left and right images is secured, and the precision in calculating the parallax of an object in a dark place is increased.

As a result, with the object detection device according to the present embodiment, the precision in detecting the object information with respect to a dark place can be increased.

Furthermore, the light projection device projects a random patterned light when the brightness outside the vehicle is less than a reference value (predetermined value) set in advance, and therefore a random patterned light can be projected only to the dark place where the precision of parallax calculation becomes low, such that needless light projection can be suppressed and energy can be saved. Note that the contrast of an object that is originally in a bright place is already high, and therefore when the outside of the vehicle is bright, the necessity of projecting a random patterned light is low.

Furthermore, the light projection device acquires the brightness information from the luminance information of the image captured by the stereo camera 20, and therefore compared to a case of separately providing a detection unit exclusively used for detecting the brightness information, it is possible to avoid an increase in the number of components and avoid increasing the cost.

Furthermore, the processing device 30 further includes the image processing unit 33 that generates a parallax image from a plurality of images captured separately by two imaging units 20a, 20b, and therefore the processing device 30 can generate a parallax image having high precision.

Furthermore, the processing device 30 includes an image recognition processing unit 34 that performs image recognition with the use of the parallax image generated by the image processing unit 33, and therefore the processing device 30 can obtain image recognition results having high precision.

Furthermore, the movable body control system 100 includes the object detection device and the ECU 50, which is installed in the vehicle main body and controls the vehicle main body based on an image recognition result obtained by the processing device 30 of the object detection device; therefore the movable body control system 100 can prevent the traveling vehicle main body from colliding with the object.

Furthermore, the vehicle 1 (movable body device) includes the movable body control system 100 and the vehicle main body (movable body) in which the movable body control system 100 is installed, and therefore the vehicle 1 has superior safety.

Furthermore, the light projection device according to the present embodiment projects a random patterned light in the imaging range of the stereo camera 20 including two imaging units 20a, 20b, and therefore the light projection device can cause the stereo camera 20 to acquire an image that makes it possible to precisely calculate the parallax of an object in the light projection range even in a dark place.

Note that, as can be understood from the above description, the light projection device, the imaging system, and the object detection device are devices that are particularly effective when used in a dark environment. These devices do not necessarily need to be installed in a movable body such as a vehicle main body, and these devices are expected to be used in various fields. Note that when the light projection device, the imaging system, and the object detection device are not installed in a movable body, a light source unit is used instead of the headlight device.

Furthermore, the object detection method using the object detection device according to the present embodiment includes a step of projecting a random patterned light from the vehicle main body, a step of capturing the range in which the random patterned light is projected from two positions of the movable body, and a step of processing the image captured in the capturing step.

In this case, the range in which the random patterned light is projected can be captured from two positions, and therefore it is possible to obtain images that are effective for detecting object information with respect to dark places, and the object information can be detected from the image with high precision.

As a result, by the object detection method according to the present embodiment, the detection precision of object information with respect to dark places can be increased.

Furthermore, the object detection method further includes a step of generating a parallax image from the plurality of images separately captured from a plurality of positions in the capturing step, and therefore a parallax image having high precision can be generated.

Furthermore, a movable body control method using the movable body control system according to the present embodiment includes a step of projecting a random patterned light from the vehicle main body, a step of capturing the range in which the random patterned light is projected from a plurality of positions of the movable body, a step of generating a parallax image from the plurality of images separately captured from a plurality of positions in the capturing step, a step of performing image recognition by using the parallax image generated in the step of generating a parallax image, and a step of controlling the vehicle main body based on the recognition result obtained in the step of performing image recognition.

In this case, it is possible to prevent the travelling vehicle main body from colliding with the object.

Furthermore, the object detection program used for controlling the object detection device according to the present embodiment, causes a computer to execute the above object detection method, which includes a step of projecting a random patterned light from the vehicle main body, a step of capturing the range in which the random patterned light is projected from a plurality of positions of the movable body, and a step of processing the image captured in the capturing step.

In this case, the range in which the random patterned light is projected can be captured from two positions, and therefore it is possible to obtain images that are effective for detecting object information with respect to dark places, and the object information can be detected from the image with high precision.

As a result, by the object detection program according to the present embodiment, the detection precision of object information with respect to dark places can be increased.

Furthermore, the object detection program further includes a step of generating a parallax image from the plurality of images separately captured from a plurality of positions in the capturing step, and therefore a parallax image having high precision can be generated.

Furthermore, a movable body control program used for controlling the movable body control system according to the present embodiment includes a step of projecting a random patterned light from the vehicle main body, a step of capturing the range in which the random patterned light is projected from a plurality of positions of the movable body, a step of generating a parallax image from the plurality of images separately captured from a plurality of positions in the capturing step, a step of performing image recognition by using the parallax image generated in the step of generating a parallax image, and a step of controlling the vehicle main body based on the recognition result obtained in the step of performing image recognition.

In this case, it is possible to prevent the travelling vehicle main body from colliding with the object.

Furthermore, part of the object detection program is stored in the memory 29, and the remaining part of the object detection program is stored in the memory 52, and therefore the object detection program can appropriately cause the object detection device to operate according to the object detection program.

Furthermore, part of the movable body control program is stored in the memory 29, and the remaining part of the movable body control program is stored in the memory 52, and therefore the movable body control program can appropriately cause the movable body control system 100 to operate according to the movable body control program.

Several modified examples of the above embodiment are described below.


«Modified example 1»

A movable body control system according to modified example 1 has the same configuration as the movable body control system 100 according to the above embodiment. In modified example 1, the light projection control process differs from that of the above embodiment.

In modified example 1, the memory 52 of the ECU 50 stores two light pattern data items having different contrasts (high contrast light pattern data and low contrast light pattern data). When the light projection control unit 51a turns on the headlight, the light projection control unit 51a selects one of the two light pattern data items according to the brightness outside the vehicle, and turns on the LED array of each headlight by using the selected light pattern data.

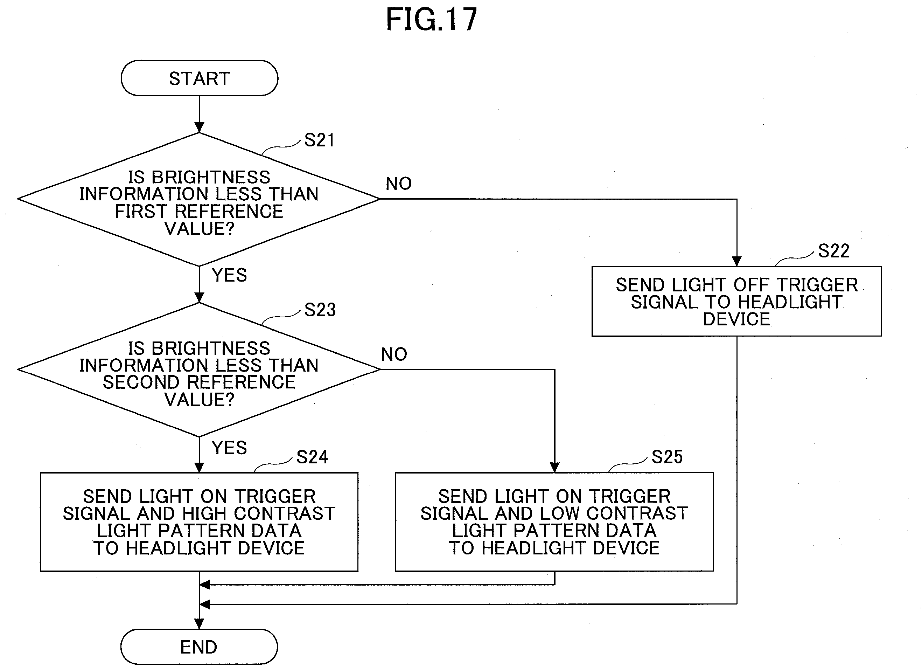

In the following, a light projection control process 2 of modified example 1 is described with reference to the flowchart of FIG 17. The light projection control process 2 is executed by the light projection control unit 51a in accordance with a sub program stored in the memory 52. Here, the brightness information is calculated in real-time by the processing device 30 based on the images (luminance images) in front of the vehicle captured in real-time by the stereo camera 20, and the calculated brightness information is sent to the light projection control unit 51a in real-time.

In the first step S21, the light projection control unit 51a determines whether the received brightness information is less than a first reference value. If the determination is negative in step S21, the process shifts to step S22, and if the determination is affirmative in step S21, the process shifts to step S23. Here, if the brightness information is greater than or equal to the first reference value (in the case of shifting to step S22), the level of the brightness is generally perceived as "bright".

In step S22, the light projection control unit 51a sends a light off trigger signal to the headlight device 10. As a result, if the headlight is on, the headlight is turned off, and if the headlight is off, the off state is maintained. When step S22 is executed, the flow ends.

In step S23, the light projection control unit 51a determines whether the received brightness information is less than a second reference value, which is less than the first reference value. If the determination is affirmative in step S23, the process shifts to step S24, and if the determination is negative in step S23, the process shifts to step S25. Here, if the brightness information is less than the first reference value and greater than or equal to the second reference value (in the case of shifting to step S25), the level of the brightness is generally perceived as "dim". If the brightness information is less than the second reference value (in the case of shifting to step S24), the level of the brightness is generally perceived as "dark".

In step S24, the light projection control unit 51a sends a light on trigger signal and high contrast light pattern data to the headlight device 10. As a result, if the headlight is on, the on state is maintained, and if the headlight is off, the headlight is turned on, and a high contrast random patterned light is projected in front of the vehicle. At this time, the stereo camera 20 captures, with both lenses, the range in which the high contrast random patterned light is projected, and the captured left and right images are sent to the image processing unit 33 in units of frames. When step S24 is executed, the flow ends.

In step S25, the light projection control unit 51a sends a light on trigger signal and low contrast light pattern data to the headlight device 10. As a result, if the headlight is on, the on state is maintained, and if the headlight is off, the headlight is turned on, and a low contrast random patterned light is projected in front of the vehicle. At this time, the stereo camera 20 captures, with both lenses, the range in which the low contrast random patterned light is projected, and the captured left and right images are sent to the image processing unit 33 in units of frames. When step S25 is executed, the flow ends.

Note that if the safety mode is ON in the vehicle control process including the light projection control process 2, the headlight is automatically turned on when the brightness information outside the vehicle is less than the first reference value, and the headlight is not turned on when the brightness information outside the vehicle is greater than or equal to the first reference value. These automatic operations are prioritized over a manual operation of the headlight switch by the driver, etc. Meanwhile, if the safety mode is OFF, the headlight device 10 is turned on or off only by the manual operation of the headlight switch by the driver, etc.

In modified example 1 described above, the light projection device including the light projection control unit 51a and the headlight device 10 adjusts the contrast of the random patterned light according to the brightness outside the vehicle (adjusts the luminance distribution), when projecting the random patterned light.

In this case, it is possible to project a random patterned light having a contrast that is appropriate for parallax calculation according to the brightness outside the vehicle.

For example, when the outside is "dim", in which the attention of the driver becomes distracted, by projecting a random patterned light having a low contrast, the parallax can be calculated with high precision, and an unpleasantness in the visibility perceived by the driver, due to the random patterned light, can be reduced. As a result, an increase in the safety by the system, and the visibility, can both be attained.

For example, when the outside is "dark", which is disadvantageous for calculating the parallax, by projecting a random patterned light having a high contrast, the parallax can be calculated with high precision. As a result, the safety by the system can be secured.

Note that in the above modified example 1, two reference values are set, and if the brightness information is less than at least one of the two reference values, one of two kinds of random patterned light having different contrasts is selectively projected; however, three or more reference values may be set, and one of the three or more kinds of random patterned light having different contrasts may be selectively projected as the brightness information changes across the respective reference values. In this case also, as the brightness information decreases (darker), a random patterned light having a higher contrast is preferably projected.

«Modified example 2»

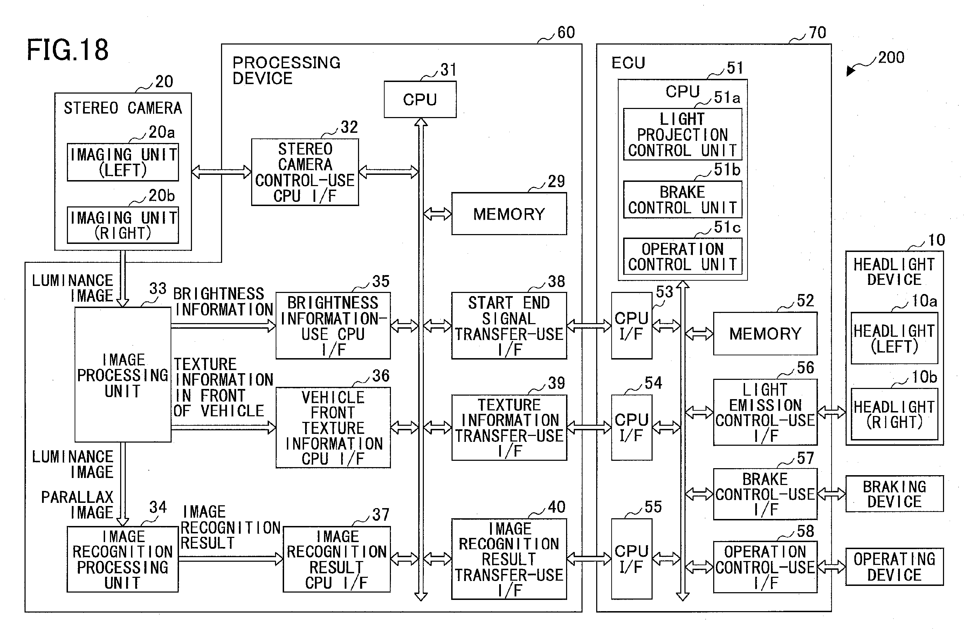

In modified example 2, the configuration of the movable body control system and the light projection control process differ from those of the above embodiment. A processing device 60 in a movable body control system 200 according to modified example 2 illustrated in FIG. 18, includes a vehicle front texture information CPU I/F 36 and a texture information transfer-use I/F 39, in addition to the processing device 30 according to the above embodiment. Furthermore, an ECU 70 of the movable body control system 200 includes a CPU I/F 54, in addition to the ECU 50 according to the above embodiment.

The image processing unit 33 of the processing device 60 calculates vehicle front texture information from the left and right images (luminance images) captured by the stereo camera 20, and sends the calculated vehicle front texture information to the CPU 31 via the vehicle front texture information CPU I/F 36. The CPU 31 sends the received vehicle front texture information, to the ECU 50 via the texture information transfer-use I/F 39.

The CPU 51 of the ECU 70 acquires the texture information from the CPU 31, via the texture information transfer-use I/F 39 and the CPU I/F 54.

In modified example 2, the memory 52 of the ECU 70 stores two light pattern data items having different contrasts (high contrast light pattern data and low contrast light pattern data). When the light projection control unit 51a turns on the headlight device 10, the light projection control unit 51a selects one of the two light pattern data items according to whether there is an object in front of the vehicle, and turns on the LED array of each headlight by using the selected one of the light pattern data items.

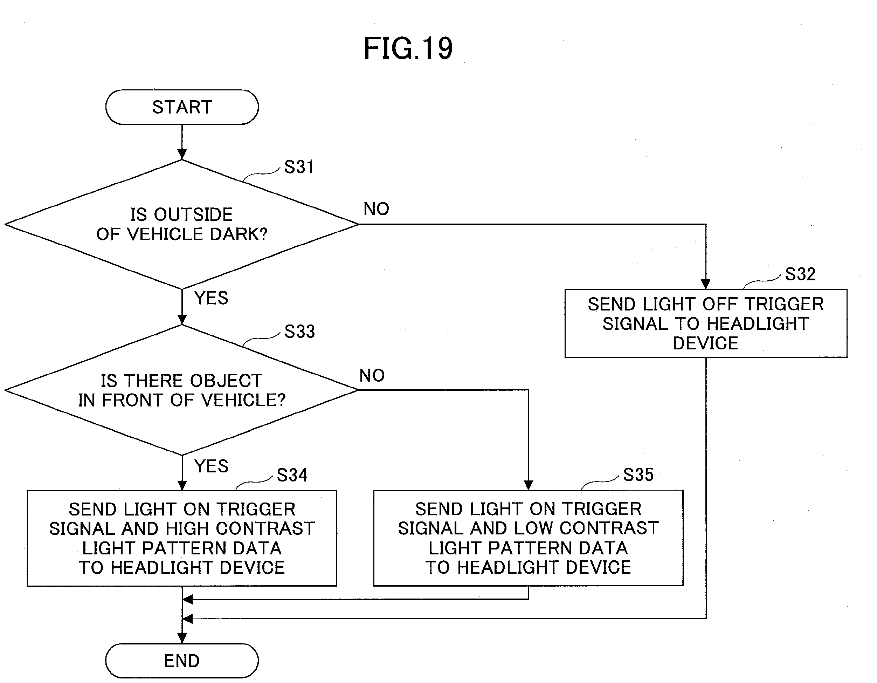

In the following, a light projection control process 3 of modified example 2 is described with reference to the flowchart of FIG 19. The light projection control process 3 is executed by the light projection control unit 51a in accordance with a sub program stored in the memory 52. Here, the brightness information is calculated in real-time by the processing device 60 based on the images (luminance images) in front of the vehicle captured in real-time by the stereo camera 20, and the calculated brightness information is sent to the light projection control unit 51a in real-time.

In the first step S31, the light projection control unit 51a determines whether the outside of the vehicle is dark. Specifically, the light projection control unit 51a compares the brightness information from the processing device 60 with a reference value set in advance, and if the brightness information is less than the reference value, the light projection control unit 51a determines that the outside is "dark", and if the brightness information is greater than or equal to the reference value, the light projection control unit 51a determines that the outside is "not dark". If the determination in step S31 is negative (if it is determined as not dark), the process shifts to step S32, and if the determination in step S31 is affirmative (if it is determined as dark), the process shifts to step S33.

In step S32, the light projection control unit 51a sends a light off trigger signal to the headlight device 10. As a result, if the headlight is on, the headlight is turned off, and if the headlight is off, the off state is maintained. When step S32 is executed, the flow ends.

In step S33, it is determined whether there is an object in front of the vehicle. Here, the processing device 60 determines whether there is an object, and outputs the determination result to the ECU 70. Specifically, the image processing unit 33 determines whether there is an object by determining the texture amount in a vehicle front area in the image (luminance image) from the stereo camera 20, and outputs the determination result to the light projection control unit 51a. More specifically, if the texture amount is greater than or equal to a threshold, the image processing unit 33 determines that "there is an object", and if the texture amount is less than a threshold, the image processing unit 33 determines that "there is no object". The method of determining the texture amount is described below. If the determination in step S33 is affirmative, the process shifts to step S34, and if the determination in step S33 is negative, the process shifts to step S35. Note that the determination of whether there is an object in front of the vehicle is not limited to a determination by the texture amount, and various methods may be used. For example, a publicly known pattern matching method may be used to recognize an object in front of the vehicle. However, the determination of whether there is an object in front of the vehicle requires fast calculation, and therefore it is effective to determine whether there is an object according to the texture amount.

In step S34, the light projection control unit 51a sends a light on trigger signal and high contrast light pattern data to the headlight device 10. As a result, if the headlight is on, the on state is maintained, and if the headlight is off, the headlight is turned on, and a high contrast random patterned light is projected in front of the vehicle. At this time, the stereo camera 20 captures, with both lenses, the range in which the high contrast random patterned light is projected, and the captured left and right images are sent to the image processing unit 33 in units of frames. When step S34 is executed, the flow ends.

In step S35, the light projection control unit 51a sends a light on trigger signal and low contrast light pattern data to the headlight device 10. As a result, if the headlight is on, the on state is maintained, and if the headlight is off, the headlight is turned on, and a low contrast random patterned light is projected in front of the vehicle. At this time, the stereo camera 20 captures, with both lenses, the range in which the low contrast random patterned light is projected, and the captured left and right images are sent to the image processing unit 33 in units of frames. When step S35 is executed, the flow ends.

In modified example 2 described above, the light projection device including the light projection control unit 51a and the headlight device 10 adjusts the contrast (adjusts the luminance distribution) of the random patterned light according to whether there is an object in front of the vehicle (in the light projection range of the light projection device), when the light projection device projects the random patterned light.

In this case, it is possible to project a random patterned light having a contrast that is sufficient according to whether there is an object in front of the vehicle, that is, according to the risk of collision.

For example, when "there is no object" and therefore the risk of collision is low, by projecting a random patterned light having a low contrast, the parallax can be calculated with high precision, and an unpleasantness in the visibility perceived by the driver, due to the random patterned light, can be reduced. As a result, the safety by the system, and the visibility, can both be attained.

For example, when "there is an object" and therefore the risk of collision is high, by projecting a random patterned light having a high contrast, the parallax can be calculated with even higher precision. As a result, the safety by the system can be secured.

Furthermore, the processing device 60 detects whether there is an object from an image captured by the stereo camera 20, and therefore compared to a case of separately providing a detection unit exclusively used for detecting whether there is an object, it is possible to avoid an increase in the number of components and avoid increasing the cost.

«Modified example 3»

In modified example 3, the configuration of the movable body control system is the same as that of the movable body control system 200 according to modified example 2. In modified example 3, the light projection control process differs from that of the above embodiment.

In modified example 3, the memory 52 of the ECU 70 stores two light pattern data items having different contrasts (high contrast light pattern data and low contrast light pattern data). When the light projection control unit 51a turns on the headlight device 10, the light projection control unit 51a selects one of the two light pattern data items according to the sum of the texture amount in front of the vehicle and the texture amount diagonally in front of the vehicle, and turns on the LED array of each headlight by using the selected one of the light pattern data items.

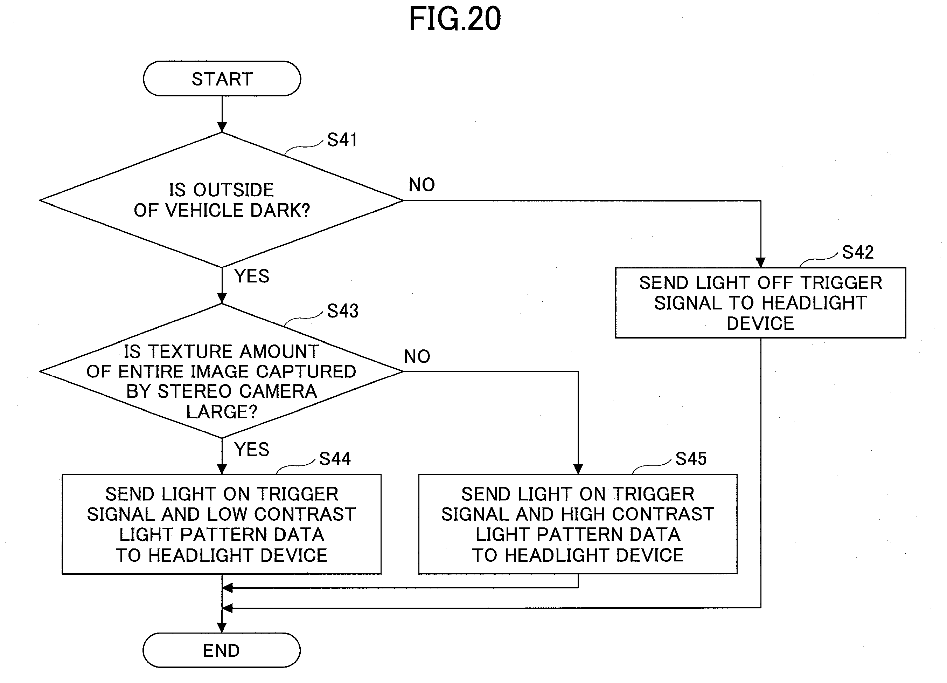

In the following, a light projection control process 4 of modified example 3 is described with reference to the flowchart of FIG 20. The light projection control process 4 is executed by the light projection control unit 51a in accordance with a sub program stored in the memory 29. Here, the brightness information is calculated in real-time by the processing device 60 based on the images (luminance images) in front of the vehicle captured in real-time by the stereo camera 20, and the calculated brightness information is sent to the light projection control unit 51a in real-time.

In the first step S41, the light projection control unit 51a determines whether the outside of the vehicle is dark. Specifically, the light projection control unit 51a compares the brightness information from the processing device 60 with a reference value set in advance, and if the brightness information is less than the reference value, the light projection control unit 51a determines that the outside is "dark", and if the brightness information is greater than or equal to the reference value, the light projection control unit 51a determines that the outside is "not dark". If the determination in step S41 is negative (if it is determined as not dark), the process shifts to step S42, and if the determination in step S41 is affirmative (if it is determined as dark), the process shifts to step S43.

In step S42, the light projection control unit 51a sends a light off trigger signal to the headlight device 10. As a result, if the headlight is on, the headlight is turned off, and if the headlight is off, the off state is maintained. When step S42 is executed, the flow ends.

In step S43, it is determined whether the texture amount of the entire image captured by the stereo camera 20 is large. Here, the processing device 60 determines the texture amount, and outputs the determination result to the ECU 70. Specifically, the image processing unit 33 determines whether the sum (hereinafter, also referred to as the "texture total amount") of the texture amount in an area in front of the vehicle and the texture amount in an area diagonally in front of the vehicle in the image (luminance image) from the stereo camera 20, is greater than or equal to a threshold, and outputs the determination result to the light projection control unit 51a. More specifically, if the texture total amount is greater than or equal to a threshold, the image processing unit 33 determines that "the texture total amount is large", and if the texture total amount is less than a threshold, the image processing unit 33 determines that "the texture total amount is not large". The method of determining the texture total amount is described below. If the determination in step S43 is affirmative, the process shifts to step S44, and if the determination in step S43 is negative, the process shifts to step S45.

In step S44, the light projection control unit 51a sends a light on trigger signal and low contrast light pattern data to the headlight device 10. As a result, if the headlight is on, the on state is maintained, and if the headlight is off, the headlight is turned on, and a low contrast random patterned light is projected in front of the vehicle. At this time, the stereo camera 20 captures, with both lenses, the range in which the low contrast random patterned light is projected, and the captured left and right images are sent to the image processing unit 33 in units of frames. When step S44 is executed, the flow ends.

In step S45, the light projection control unit 51a sends a light on trigger signal and high contrast light pattern data to the headlight device 10. As a result, if the headlight is on, the on state is maintained, and if the headlight is off, the headlight is turned on, and a high contrast random patterned light is projected in front of the vehicle. At this time, the stereo camera 20 captures, with both lenses, the range in which the high contrast random patterned light is projected, and the captured left and right images are sent to the image processing unit 33 in units of frames. When step S45 is executed, the flow ends.

In modified example 3 described above, the light projection device including the light projection control unit 51a and the headlight device 10 adjusts the contrast (adjusts the luminance distribution) of the random patterned light based on the sum of the texture amount in front of the vehicle and the texture amount diagonally in front of the vehicle (the texture total amount in the light projection range of the headlight device 10), when the light projection device projects the random patterned light.

In this case, it is possible to project a random patterned light having a contrast that is sufficient according to the sum of the texture amount in front of the vehicle and the texture amount diagonally in front of the vehicle (the texture total amount).

For example, when the texture total amount is large (when travelling in a busy street, in forest land, etc.), by projecting a random patterned light having a low contrast, the parallax can be calculated with high precision, and an unpleasantness in the visibility perceived by the driver, due to the random patterned light, can be reduced. As a result, the safety by the system, and the visibility, can both be attained.

For example, when the texture total amount is small (when travelling along the seaside, in the countryside, in the wilderness, etc.), by projecting a random patterned light having a high contrast, the parallax can be calculated with even higher precision. As a result, the safety by the system can be secured.

Furthermore, the processing device 60 acquires the texture amount in the light projection range from an image captured by the stereo camera 20, and therefore compared to a case of separately providing a detection unit exclusively used for detecting the texture amount, it is possible to avoid an increase in the number of components and avoid increasing the cost.

Note that in the above modified example 3, one threshold of the texture total amount is set, and one of two kinds of random patterned light having different contrasts is selectively projected as the texture amount changes across the threshold; however, two or more thresholds of the texture total amount may be set, and one of three or more kinds of random patterned light having different contrasts may be selectively projected as the texture amount changes across the respective thresholds. In this case also, as the texture total amount decreases, a random patterned light having a higher contrast is preferably projected.

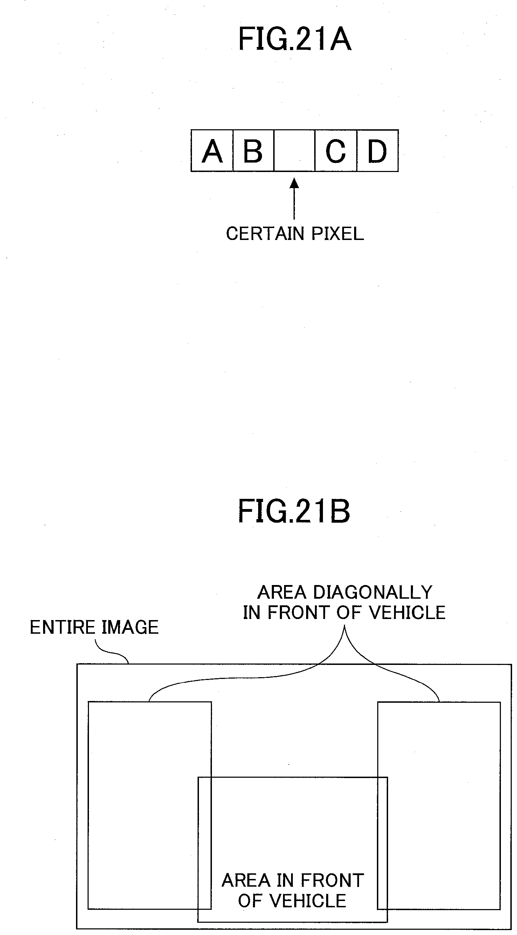

Here, the method of determining the texture amount in modified example 2 and the method of determining the texture total amount in modified example 3 are described with reference to FIGS. 21A and 21B.

First, in FIG. 21A, the texture definition equation of a certain pixel is set as Txt=|(A+B)-(C+D)|. ‖ means an absolute value.

A is a pixel value of a pixel that is two pixels away from the certain pixel on the left side of the certain pixel.

B is a pixel value of a pixel that is one pixel away from the certain pixel on the left side of the certain pixel.

C is a pixel value of a pixel that is one pixel away from the certain pixel on the right side of the certain pixel.

D is a pixel value of a pixel that is two pixels away from the certain pixel on the right side of the certain pixel.

Th is the texture threshold.

If Txt>Th is satisfied, the corresponding pixel is determined to have texture, and a texture flag flag=1 is set.

If Txt>Th is not satisfied, the corresponding pixel is determined not to have texture, and a texture flag flag=0 is set. This process is performed for each of the pixels in the entire image, or in a determination target area that is a target of determining the texture amount in the image. By counting the number of pixels having flag=1, it is possible to determine the texture amount of the entire image or the entire determination target area (see FIG. 21B). For example, if the texture amount only in the area in front of the vehicle is to be determined, the range of the area in front of the vehicle is specified in advance (for example, four coordinate points), and the number of pixels having flag=1 in the range is counted. For example, when the texture amount in the areas diagonally in front of the vehicle is to be determined, the areas on both sides of the image are specified as the target areas (coordinate points are specified), and the number of pixels having flag=1 in the range is counted. Note that the above definition equation of the "texture amount" is one example; for example, various equations may be used, such as Txt=|A-C| and Txt=|B-D|.

«Modified example 4»

In modified example 4, the configuration of the movable body control system is the same as that of the movable body control system 100 according to the above embodiment. In modified example 4, the light projection control process differs from that of the above embodiment.

In modified example 4, the memory 52 of the ECU 50 stores two light pattern data items having different contrasts (high contrast light pattern data and low contrast light pattern data). When the light projection control unit 51a turns on the headlight device 10, the light projection control unit 51a selects one of the two light pattern data items according to the number of invalid parallax pixels in the parallax image (reliability information in parallax), and turns on the LED array of each headlight by using the selected one of the light pattern data items.

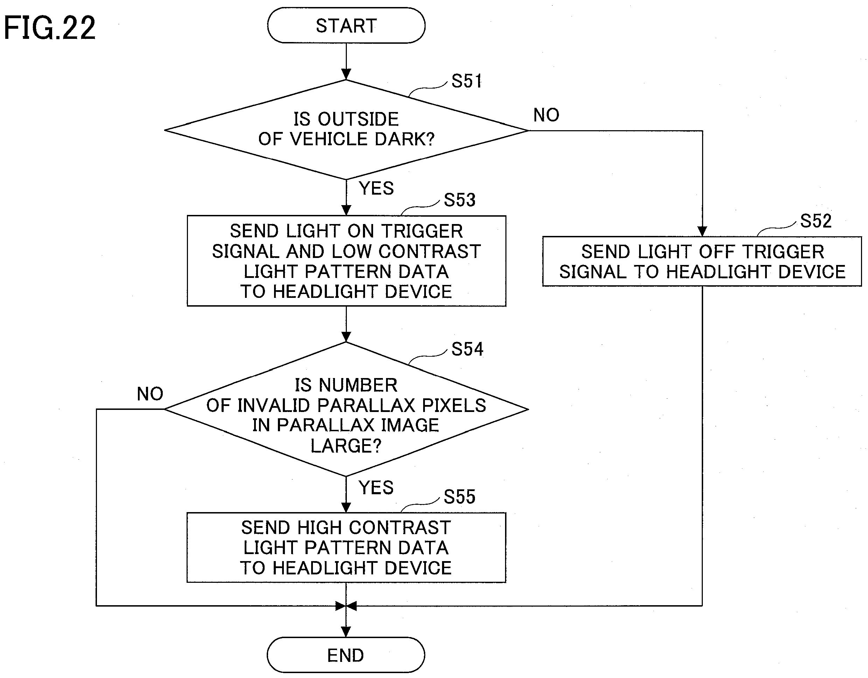

In the following, a light projection control process 5 of modified example 4 is described with reference to the flowchart of FIG 22. The light projection control process 5 is executed by the light projection control unit 51a in accordance with a sub program stored in the memory 52. Here, the brightness information is calculated in real-time by the processing device 30 based on the images (luminance images) in front of the vehicle captured in real-time by the stereo camera 20, and the calculated brightness information is sent to the light projection control unit 51a in real-time.

In the first step S51, the light projection control unit 51a determines whether the outside of the vehicle is dark. Specifically, the light projection control unit 51a compares the brightness information from the processing device 30 with a reference value set in advance, and if the brightness information is less than the reference value, the light projection control unit 51a determines that the outside is "dark", and if the brightness information is greater than or equal to the reference value, the light projection control unit 51a determines that the outside is "not dark". If the determination in step S51 is negative (if it is determined as not dark), the process shifts to step S52, and if the determination in step S51 is affirmative (if it is determined as dark), the process shifts to step S53.

In step S52, the light projection control unit 51a sends a light off trigger signal to the headlight device 10. As a result, if the headlight is on, the headlight is turned off, and if the headlight is off, the off state is maintained. When step S52 is executed, the flow ends.

In step S53, the light projection control unit 51a sends a light on trigger signal and low contrast light pattern data to the headlight device 10. As a result, if the headlight is on, the on state is maintained, and if the headlight is off, the headlight is turned on, and a low contrast random patterned light is projected in front of the vehicle. At this time, the stereo camera 20 captures, with both lenses, the range in which the low contrast random patterned light is projected, and the captured left and right images are sent to the image processing unit 33 in units of frames. When step S53 is executed, the process shifts to step S54.

In step S54, it is determined whether many invalid parallax pixels are present in the parallax image. Here, the processing device 30 determines whether the number of invalid parallax pixels in the parallax image is large or small, and outputs the determination result to the ECU 50. Specifically, the image processing unit 33 performs a pre-process of gamma correction, distortion correction, etc., on the image (luminance image) captured by the stereo camera 20, subsequently performs parallax calculation, and sends a parallax image obtained by the parallax calculation to the image recognition processing unit 34. The image recognition processing unit 34 determines whether the number of invalid parallax pixels in the received parallax image is greater than or equal to a threshold, and outputs the determination result to the light projection control unit 51a. If the determination in step S54 is affirmative, the process shifts to step S55, and if the determination in step S54 is negative, the flow ends.

In step S55, the light projection control unit 51a sends a light on trigger signal and high contrast light pattern data to the headlight device 10. As a result, if the headlight is on, the on state is maintained, and if the headlight is off, the headlight is turned on, and a high contrast random patterned light is projected in front of the vehicle. At this time, the stereo camera 20 captures, with both lenses, the range in which the high contrast random patterned light is projected, and the captured left and right images are sent to the image processing unit 33 in units of frames. When step S55 is executed, the flow ends.

In modified example 4 described above, the light projection device including the light projection control unit 51a and the headlight device 10 adjusts the contrast of the random patterned light (adjusts the luminance distribution), based on the number of invalid parallax pixels in the parallax image, that is, the reliability information of parallax, when projecting the random patterned light.

In this case, it is possible to project a random patterned light having a contrast that is appropriate for parallax calculation according to the reliability information of parallax.

For example, when the number of invalid parallax pixels is small (when the reliability information of parallax is high), by projecting a random patterned light having a low contrast, the parallax can be calculated with high precision, and an unpleasantness in the visibility perceived by the driver, due to the random patterned light, can be reduced. As a result, the safety by the system, and the visibility, can both be attained.

For example, when the number of invalid parallax pixels is large (when the reliability information of parallax is low), by projecting a random patterned light having a high contrast, the parallax can be calculated with high precision. As a result, the safety by the system can be secured.

Furthermore, the processing device 30 acquires the number of invalid parallax pixels (reliability information of parallax) form an image captured by the stereo camera 20, and therefore compared to a case of acquiring the number of invalid parallax pixels by another means, the configuration can be simplified, and an increase in cost can be avoided.

Note that in the above modified example 4, one threshold of the number of invalid parallax pixels is set, and one of two kinds of random patterned light having different contrasts is selectively projected as the number of invalid parallax pixels changes across the threshold; however, two or more thresholds of the number of invalid parallax pixels may be set, and one of three or more kinds of random patterned light having different contrasts may be selectively projected as the number of invalid parallax pixels changes across the respective thresholds.. In this case also, as the number of invalid parallax pixels increases, a random patterned light having a higher contrast is preferably projected.

«Modified example 5»

In modified example 5, the configuration of the movable body control system is the same as that of the movable body control system 100 according to the above embodiment. In modified example 5, the light projection control process differs from that of the above embodiment.

In modified example 5, the memory 52 of the ECU 50 stores two light pattern data items having different contrasts (high contrast light pattern data and low contrast light pattern data). When the light projection control unit 51a turns on the headlight device 10, the light projection control unit 51a selects one of the two light pattern data items according to whether there is an object in front of the vehicle, and turns on the LED array of each headlight by using the selected one of the light pattern data items.

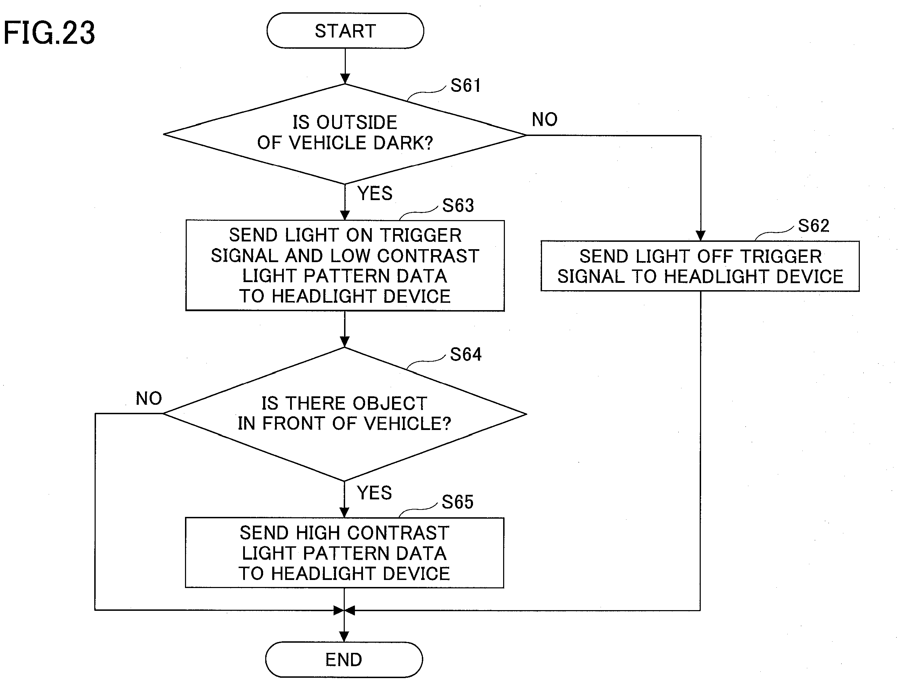

In the following, a light projection control process 6 of modified example 5 is described with reference to the flowchart of FIG 23. The light projection control process 6 is executed by the light projection control unit 51a in accordance with a sub program stored in the memory 52. Here, the brightness information is calculated in real-time by the processing device 30 based on the images (luminance images) in front of the vehicle captured in real-time by the stereo camera 20, and the calculated brightness information is sent to the light projection control unit 51a in real-time.

In the first step S61, the light projection control unit 51a determines whether the outside of the vehicle is dark. Specifically, the light projection control unit 51a compares the brightness information from the processing device 30 with a reference value set in advance, and if the brightness information is less than the reference value, the light projection control unit 51a determines that the outside is "dark", and if the brightness information is greater than or equal to the reference value, the light projection control unit 51a determines that the outside is "not dark". If the determination in step S61 is negative (if it is determined as not dark), the process shifts to step S62, and if the determination in step S61 is affirmative (if it is determined as dark), the process shifts to step S63.

In step S62, the light projection control unit 51a sends a light off trigger signal to the headlight device 10. As a result, if the headlight is on, the headlight is turned off, and if the headlight is off, the off state is maintained. When step S62 is executed, the flow ends.

In step S63, the light projection control unit 51a sends a light on trigger signal and low contrast light pattern data to the headlight device 10. As a result, if the headlight is on, the on state is maintained, and if the headlight is off, the headlight is turned on, and a low contrast random patterned light is projected in front of the vehicle. At this time, the stereo camera 20 captures, with both lenses, the range in which the low contrast random patterned light is projected, and the captured left and right images are sent to the image processing unit 33 in units of frames. When step S63 is executed, the process shifts to step S64.

In step S64, it is determined whether there is an object in front of the vehicle. Specifically, the processing device 30 generates a parallax image, determines whether there is an object by performing image recognition by using the parallax image, and outputs the determination result to the ECU 50. More specifically, the image processing unit 33 performs a pre-process of gamma correction, distortion correction, etc., on the images (luminance images) captured by the stereo camera 20, subsequently performs parallax calculation, and sends the luminance images that have undergone the pre-process and a parallax image obtained by the parallax calculation to the image recognition processing unit 34. The image recognition processing unit 34 determines whether there is an object by performing image recognition by using the luminance images and the parallax image, and outputs the determination result to the light projection control unit 51a. If the determination in step S64 is affirmative, the process shifts to step S65, and if the determination in step S64 is negative, the flow ends.

In step S65, the light projection control unit 51a sends a light on trigger signal and high contrast light pattern data to the headlight device 10. As a result, if the headlight is on, the on state is maintained, and if the headlight is off, the headlight is turned on, and a high contrast random patterned light is projected in front of the vehicle. At this time, the stereo camera 20 captures, with both lenses, the range in which the high contrast random patterned light is projected, and the captured left and right images are sent to the image processing unit 33 in units of frames. When step S65 is executed, the flow ends.

In modified example 5 described above, a low contrast random patterned light is projected when the outside of the vehicle is dark, a parallax image is generated form a captured image, and image recognition is performed by using the parallax image, and therefore it can be detected whether there is an object in front of the vehicle with high precision. Then, the light projection device adjusts the contrast of the random patterned light (adjusts the luminance distribution), based on whether there is an object in front of the vehicle. That is, when it is detected that "there is no object" in front of the vehicle, projection of a low contrast random patterned light is continued, and when it is detected that "there is an object" in front of the vehicle, the projected light is switched to a high contrast random patterned light.

In this case, it is possible to project a random patterned light having an appropriate contrast according to whether there is an object in front of the vehicle.

As a result, it is possible to project a random patterned light having an appropriate contrast according to whether there is an object in front of the vehicle, that is, according to the risk of collision.

For example, when "there is no object" and therefore the risk of collision is low, by projecting a random patterned light having a low contrast, the parallax can be calculated with high precision, and an unpleasantness in the visibility perceived by the driver, due to the random patterned light, can be reduced. As a result, the safety by the system, and the visibility, can both be attained.

For example, when "there is an object" and therefore the risk of collision is high, by projecting a random patterned light having a high contrast, the parallax can be calculated with high precision. As a result, the safety by the system can be secured.

Furthermore, the processing device 30 detects whether there is an object from an image captured by the stereo camera 20, and therefore compared to a case of separately providing a detection unit exclusively used for detecting whether there is an object, it is possible to avoid an increase in the number of components and avoid increasing the cost.

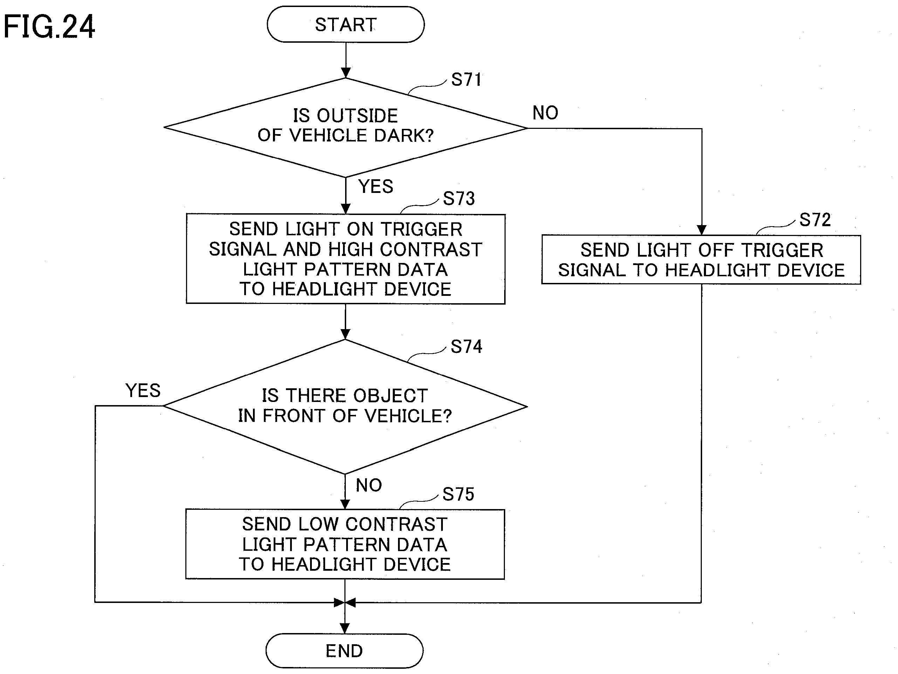

Note that control may be implemented by practically replacing step S63 and step S65 with each other in the flowchart of FIG. 23, as in a light projection control process 7 in modified example 6 illustrated in FIG. 24 (steps S71 through S75). Modified example 6 can also obtain the same effects as those of modified example 5.

In the following, examples 1 through 5 (parallax calculation method used: SGM algorithm) according to embodiments and modified examples are described (see table 1).

<Example 1> (corresponding to above embodiment)

While the vehicle was traveling, the driver determined that it is dark, and manually turned on the headlight. An uneven contrast was applied to the light emitted from the headlight. As a result, the number of invalid parallax pixels in front of the vehicle was reduced.

<Example 2> (corresponding to above embodiment)

A brightness information detection unit was used. While the vehicle was traveling, it was automatically determined that it is dark, and the headlight was automatically turned on. An uneven contrast was applied to the light emitted from the headlight. As a result, the number of invalid parallax pixels in front of the vehicle was reduced.

<Example 3> (corresponding above modified examples 2 and 5)

A brightness information detection unit and an object presence detection unit were used. While the vehicle was traveling, it was automatically determined that it is dark, and the headlight was automatically turned on. Furthermore, while the vehicle was traveling, another vehicle was detected at 40 m ahead in front of the vehicle, and therefore an uneven contrast was applied to the light emitted from the headlight. As a result, the number of invalid parallax pixels in front of the vehicle was reduced. Particularly, the number of invalid parallax pixels of the other vehicle in front of the vehicle was reduced.

<Example 4> (corresponding above modified example 3)

A brightness information detection unit and a texture detection unit were used. While the vehicle was traveling, it was automatically determined that it is dark, and the headlight was automatically turned on. Furthermore, while the vehicle was traveling, it was determined that there was not much texture remaining in the luminance image, and therefore an uneven contrast was applied to the light emitted from the headlight. As a result, the number of invalid parallax pixels in front of the vehicle was reduced.

<Example 5> (corresponding above modified example 4)

A brightness detection unit and a parallax image reliability information (number of invalid parallax pixels) acquiring unit were used. While the vehicle was traveling, it was automatically determined that it is dark, and the headlight was automatically turned on. Furthermore, while the vehicle was traveling, it was determined that the number of invalid parallax pixels in the parallax image was 65% with respect to the total number of pixels, and therefore an uneven contrast was applied to the light emitted from the headlight. As a result, the number of invalid parallax pixels in front of the vehicle was reduced.

[Table 1]

| RESULTS OF EXAMPLES 1 THROUGH 5 | | | | | | | |
|---|---|---|---|---|---|---|---|
| | BRIGHTNESS DETECTION | DETECTION OF OBJECT IN FRONT OF VEHICLE | DETECTION OF TEXTURE IN FRONT OF VEHICLE | DETECTION 0F NUMBER OF INVALID PARALLAX PIXELS IN FRONT OF VEHICLE | RATIO OF NUMBER OF INVALID PARALLAX PIXELS WITH RESPECT TO NUMBER OF ALL PIXELS | | OUTPUT RESULT OF PARALLAX IMAGE |
| | | | | | SGM PARALLAX CALCULATION RESULT WHEN PRESENT INVENTION IS IMPLEMENTED | SGM PARALLAX CALCULATION RESULT WHEN PRESENT INVENTION IS NOT IMPLEMENTED | |
| EXAMPLE 1 | OFF (MANUAL OPERATION BY DRIVER) | OFF | OFF | OFF | 40% | 65% | NUMBER OF INVALID PARALLAX PIXELS IN FRONT OF VEHICLE DECREASED. |
| EXAMPLE 2 | ON | OFF | OFF | OFF | 40% | 65% | NUMBER OF INVALID PARALLAX PIXELS IN FRONT OF VEHICLE DECREASED. |
| EXAMPLE 3 | ON | ON | OFF | OFF | 30% | 65% | NUMBER OF INVALID PARALLAX PIXELS OF OBJECT IN FRONT OF VEHICLE DECREASED. |
| EXAMPLE 4 | ON | OFF | ON | OFF | 30% | 65% | NUMBER OF INVALID PARALLAX PIXELS IN FRONT OF VEHICLE DECREASED. |
| EXAMPLE 5 | ON | OFF | OFF | ON | 30% | 65% | NUMBER OF INVALID PARALLAX PIXELS IN FRONT OF VEHICLE DECREASED. |

Note that in examples 1 through 5, a stereo camera was used as the means of the detection system; however, the detection system is not so limited. As a means other than the means for acquiring the parallax information, a monocular camera, a polarization camera, a laser radar, etc., may be used.

The above embodiments, examples and modified examples may be appropriately modified. For example, a plurality of random patterned light beams may be a plurality of random patterned light beams having different contrasts and different designs, or may be a plurality of random patterned light beams having different designs and the same contrast. The plurality of random patterned light beams may be switched manually by the driver.

Furthermore, in the above modified examples and examples, instead of projecting a random patterned light of low contrast, a light having a design without contrast (having an even luminance distribution), or patterned light having a regular luminance distribution such as a light having regularity in the contrast, may be projected.

**Claims**

1.    An image processing system comprising an imaging system for a vehicle main body (1), the imaging system comprising:

   a light projection device including a headlight (10) provided at a front part of the vehicle main body (1) as a light source unit, the headlight including a plurality of LEDs arranged in a LED array, the light projection device being configured to project a random patterned light having an irregular luminance distribution by turning on the LED array according to a light emitting pattern having an irregular light amount distribution;
   an imaging device (20) including a plurality of imaging units (20a, 20b), configured to capture an image of an area within a light projection range in which the random patterned light is projected; the image processing system further comprising
   a processing device (30) being configured to
   process the image captured by the imaging device of the imaging system,
   generate a parallax image from a plurality of the images separately captured by the plurality of imaging units (20a, 20b) when the random patterned light is projected from the light projection device, wherein
   the light projection device is configured to project the random patterned light when it is determined by an electronic control device (50) comprised in the image processing system that the outside of the vehicle main body (1) is dark when brightness outside the movable body is less than a predetermined value.

2.    The image processing system according to claim 1, wherein
   the processing device (30) is configured to calculate brightness information indicating the brightness outside the movable body (1), based on a luminance of the image captured by the imaging device (20).

3.    The image processing system according to claim 2, wherein
   the light projection device is configured to adjust the contrast of the random patterned light according to the brightness information, when projecting the random patterned light, so that a random pattern light having a higher contrast is projected as the brightness information decreases.

4.    The image processing system according to claim 1 or 2, wherein
   the light projection device is configured to adjust the contrast of the random patterned light according to whether there is an object in the light projection range, when projecting the random patterned light, so that a random patterned light having a high contrast is projected in case there is an object in the light projection range and a random patterned light having a low contrast is projected in case there is no object in the light projection range.

5.    The image processing system according to claim 1 or 2, wherein
   the light projection device is configured to adjust the contrast of the random patterned light based on a texture amount in the light projection range, when projecting the random patterned light, so that a random patterned light having a high contrast is projected in case the texture amount is small and a random patterned light having a low contrast is projected in case the texture amount is large.

6.    The image processing system according to claim 5, wherein
   the processing device (30) is configured to calculate the texture amount, based on the image captured by the imaging device (20).

7.    The image processing system according to claim 1, wherein

the processing device performs image recognition by using the parallax image.

8. A parallax image generation method for an image processing system for a vehicle main body (1), the method comprising:

projecting, by a light projection device comprised in the imaging system and including a headlight (10) provided at a front part of the vehicle main body (1) as a light source unit, the headlight including a plurality of LEDs arranged in a LED array, a random patterned light having an irregular luminance distribution by turning on the LED array according to a light emitting pattern having an irregular light amount distribution;

capturing, by a plurality of imaging units (20a, 20b) included in an imaging device (20) comprised in the imaging system, an image of an area within a light projection range in which the random patterned light is projected;

processing, by a processing device (30) comprised in the image processing system, the image captured by the imaging device of the imaging system;

generating, by the processing device (30), a parallax image from a plurality of the images separately captured by the plurality of imaging units (20a, 20b) when the random patterned light is projected from the light projection device; and

determining, by an electronic control device (50) comprised in the image processing system, that the outside of the vehicle main body (1) is dark when brightness outside the movable body is less than a predetermined value, wherein

the step of projecting the random patterned light is performed when it is determined that the outside of the vehicle main body (1) is dark.

**Patentansprüche**

1. Bildverarbeitungssystem, das ein Bildgebungssystem für einen Fahrzeughauptkörper (1) enthält, wobei das Bildgebungssystem enthält:

eine Lichtprojektionsvorrichtung, die einen Scheinwerfer (10) enthält, der an einem Vorderteil des Fahrzeughauptkörpers (1) als Lichtquelleneinheit vorgesehen ist, wobei der Scheinwerfer eine Mehrzahl LEDs, die in einer LED-Anordnung angeordnet sind, enthält, wobei die Lichtprojektionsvorrichtung eingerichtet ist, ein zufällig gemustertes Licht zu projizieren, das eine unregelmäßige Helligkeitsverteilung aufweist, indem die LED-Anordnung gemäß einem Lichtemissionsmuster, das eine unregelmäßige Lichtmengenverteilung aufweist, eingeschaltet wird;

eine Bildgebungsvorrichtung (20), die eine Mehrzahl Bildgebungseinheiten (20a, 20b) enthält und eingerichtet ist, ein Bild eines Bereichs innerhalb eines Lichtprojektionsbereichs, in dem das zufällig gemusterte Licht projiziert wird, aufzunehmen; wobei das Bildverarbeitungssystem ferner eine Verarbeitungsvorrichtung (30) enthält, die eingerichtet ist,

das von der Bildgebungsvorrichtung des Bildgebungssystems aufgenommene Bild zu verarbeiten,

ein Parallaxenbild aus einer Mehrzahl der getrennt voneinander von der Mehrzahl Bildgebungseinheiten (20a, 20b) aufgenommen Bilder zu erzeugen, wenn das zufällig gemusterte Licht von der Lichtprojektionsvorrichtung projiziert wird, wobei

die Lichtprojektionsvorrichtung eingerichtet ist, das zufällig gemusterte Licht zu projizieren, wenn von einer in dem Bildverarbeitungssystem enthaltenen elektronischen Steuervorrichtung (50) ermittelt wird, dass das Äußere des Fahrzeughauptkörpers (1) dunkel ist, wenn eine Helligkeit außerhalb des beweglichen Körpers geringer als ein vorbestimmter Wert ist.

2. Bildverarbeitungssystem gemäß Anspruch 1, bei dem die Verarbeitungsvorrichtung (30) eingerichtet ist Helligkeitsinformationen zu berechnen, die die Helligkeit außerhalb des beweglichen Körpers (1) basierend auf einer Helligkeit des von der Bildgebungsvorrichtung (20) aufgenommenen Bilds zu berechnen, die die Helligkeit außerhalb des beweglichen Körpers (1) anzeigt.

3. Bildverarbeitungssystem gemäß Anspruch 2, bei dem die Lichtprojektionsvorrichtung eingerichtet ist, den Kontrast des zufällig gemusterten Lichts gemäß den Helligkeitsinformationen einzustellen, wenn das zufällig gemusterte Licht projiziert wird, so dass ein zufälliges Lichtmuster, das einen höheren Kontrast aufweist, projiziert wird, wenn die Helligkeitsinformationen abnehmen.

4. Bildverarbeitungssystem gemäß Anspruch 1 oder 2, bei dem

die Lichtprojektionsvorrichtung eingerichtet ist, den Kontrast des zufällig gemusterten Lichts demgemäß einzustellen, ob es ein Objekt in dem Lichtprojektionsbereich gibt, wenn das zufällig gemusterte Licht projiziert wird, so dass ein zufällig gemustertes Licht, das einen hohen Kontrast aufweist projiziert wird, wenn es ein Objekt in dem Lichtprojektionsbereich gibt, und ein zufällig gemustertes Licht, das einen geringen Kontrast aufweist, projiziert wird, wenn es kein Objekt in dem Lichtprojektionsbereich gibt.

5. Bildverarbeitungssystem gemäß Anspruch 1 oder 2, bei dem
die Lichtprojektionsvorrichtung eingerichtet ist, den Kontrast des zufällig gemusterten Lichts basierend auf einer Texturmenge in dem Lichtprojektionsbereich einzustellen, wenn das zufällig gemusterte Licht projiziert wird, so dass ein zufällig gemustertes Licht, das einen hohen Kontrast aufweist, projiziert wird, wenn der Texturbetrag klein ist, und ein zufällig gemustertes Licht, das einen niedrigen Kontrast aufweist projiziert wird, wenn der Texturbetrag groß ist.

6. Bildverarbeitungssystem gemäß Anspruch 5, bei dem
die Verarbeitungsvorrichtung (30) eingerichtet ist, die Texturmenge basierend auf dem von der Bildgebungsvorrichtung (20) aufgenommenen Bild zu berechnen.

7. Bildverarbeitungssystem gemäß Anspruch 1, bei dem
die Verarbeitungsvorrichtung Bilderkennung unter Verwendung des Parallaxenbilds durchführt.

8. Parallaxenbilderzeugungsverfahren für ein Bildverarbeitungssystem, das ein Bildgebungssystem für einen Fahrzeughauptkörper (1) enthält, wobei das Verfahren enthält:

Projizieren durch eine Lichtprojektionsvorrichtung, die in dem Bildgebungssystem enthalten ist und einen Scheinwerfer (10) der in einem Vorderteil des Fahrzeughauptkörpers (1) als Lichtquelleneinheit vorgesehen ist, enthält, wobei der Scheinwerfer eine Mehrzahl LEDs, die in einer LED-Anordnung angeordnet sind, enthält, eines zufällig gemusterten Lichts, das eine unregelmäßige Helligkeitsverteilung aufweist, indem die LED-Anordnung gemäß einem Lichtemissionsmuster, das eine unregelmäßige Lichtmengenverteilung aufweist, eingeschaltet wird;
Aufnehmen, mittels einer Mehrzahl von Bildgebungseinheiten (20a, 20b), die in einer in dem Bildgebungssystem enthaltenen Bildgebungsvorrichtung (20) enthalten sind, eines Bildes eines Bereichs innerhalb eines Lichtprojektionsbereichs, in dem das zufällig gemusterte Licht projiziert wird;
Verarbeiten, durch eine Verarbeitungsvorrichtung (30), die in dem Bildverarbeitungssystem enthalten ist, des von der Bildgebungsvorrichtung des Bildgebungssystems aufgenommen Bilds;
Erzeugen, durch die Verarbeitungsvorrichtung (30), eines Parallaxenbilds aus einer Mehrzahl der getrennt voneinander von der Mehrzahl Bildgebungseinheiten (20a, 20b) aufgenommen Bilder, wenn das zufällig gemusterte Licht von der Lichtprojektionsvorrichtung projiziert wird; und
Ermitteln, durch eine in dem Bildverarbeitungssystem enthaltene elektronische Steuervorrichtung (50), dass das Äußere des Fahrzeughauptkörpers (1) dunkel ist, wenn eine Helligkeit außerhalb des beweglichen Körpers geringer als ein vorbestimmter Wert ist, wobei der Schritt des Projizierens des zufällig gemusterten Lichts durchgeführt wird, wenn ermittelt wird, dass das Äußere des Fahrzeughauptkörpers (1) dunkel ist.

## Revendications

1. Système de traitement d'images comprenant un système d'imagerie pour un corps principal de véhicule (1), le système d'imagerie comprenant :

un dispositif de projection de lumière comprenant un projecteur (10) disposé dans une partie avant du corps principal de véhicule (1) en tant qu'unité de source de lumière, le projecteur comprenant une pluralité de LED disposées dans un réseau de LED, le dispositif de projection de lumière étant conçu pour projeter une lumière à motifs aléatoires présentant une distribution de luminance irrégulière en allumant le réseau de LED en fonction d'un motif d'émission de lumière présentant une distribution de quantité de lumière irrégulière ;
un dispositif d'imagerie (20) comprenant une pluralité d'unités d'imagerie (20a, 20b), conçu pour capturer une image d'une zone dans une plage de projection de lumière dans laquelle la lumière à motifs aléatoires est projetée ; le système de traitement d'images comprenant en outre
un dispositif de traitement (30) étant conçu pour traiter l'image capturée par le dispositif d'imagerie du système d'imagerie, générer une image de parallaxe à partir d'une pluralité des images capturées séparément par la pluralité d'unités d'imagerie (20a, 20b) lorsque la lumière à motifs aléatoires est projetée depuis le dispositif de projection de lumière,

le dispositif de projection de lumière étant conçu pour projeter la lumière à motifs aléatoires lorsqu'il est déterminé par un dispositif de commande électronique (50) compris dans le système de traitement d'images que l'extérieur du corps principal de véhicule (1) est sombre lorsque la luminosité à l'extérieur du corps mobile est inférieure à une valeur prédéterminée.

2. Système de traitement d'images selon la revendication 1, dans lequel
le dispositif de traitement (30) est conçu pour calculer des informations de luminosité indiquant la luminosité à l'extérieur du corps mobile (1), en fonction d'une luminance de l'image capturée par le dispositif d'imagerie (20).

3. Système de traitement d'images selon la revendication 2, dans lequel
le dispositif de projection de lumière est conçu pour ajuster le contraste de la lumière à motifs aléatoires en fonction des informations de luminosité, lors de la projection de la lumière à motifs aléatoires, de manière qu'une lumière à motifs aléatoires présentant un contraste supérieur est projetée tandis que les informations de luminosité diminuent.

4. Système de traitement d'image selon la revendication 1 ou 2, dans lequel
le dispositif de projection de lumière est conçu pour ajuster le contraste de la lumière à motifs aléatoires selon s'il existe un objet dans la plage de projection de lumière, lors de la projection de la lumière à motifs aléatoires, de manière qu'une lumière à motifs aléatoires présentant un contraste élevé est projetée au cas où il existe un objet dans la plage de projection de lumière et une lumière à motifs aléatoires présentant un contraste faible est projetée au cas où il n'existe aucun objet dans la plage de projection de lumière.

5. Système de traitement d'images selon la revendication 1 ou 2, dans lequel
le dispositif de projection de lumière est conçu pour ajuster le contraste de la lumière à motifs aléatoires en fonction d'une quantité de texture dans la plage de projection de lumière, lors de la projection de la lumière à motifs aléatoires, de manière qu'une lumière à motifs aléatoires présentant un contraste élevé est projetée au cas où la quantité de texture est faible et une lumière à motifs aléatoires présentant un contraste faible est projetée au cas où la quantité de texture est élevée.

6. Système de traitement d'images selon la revendication 5, dans lequel
le dispositif de traitement (30) est conçu pour calculer la quantité de texture, en fonction de l'image capturée par le dispositif d'imagerie (20).

7. Système de traitement d'images selon la revendication 1, dans lequel
le dispositif de traitement effectue une reconnaissance d'image à l'aide de l'image de parallaxe.

8. Procédé de génération d'images de parallaxe pour un système de traitement d'images comprenant un système d'imagerie pour un corps principal de véhicule (1), le procédé comprenant :

la projection, par un dispositif de projection de lumière compris dans le système d'imagerie et comprenant un projecteur (10) disposé dans une partie avant du corps principal de véhicule (1) en tant qu'unité de source de lumière, le projecteur comprenant une pluralité de LED disposées dans un réseau de LED, une lumière à motifs aléatoires présentant une distribution de luminance irrégulière en allumant le réseau de LED en fonction d'un motif d'émission de lumière présentant une distribution de quantité de lumière irrégulière ;
la capture, par une pluralité d'unités d'imagerie (20a, 20b) comprises dans un dispositif d'imagerie (20) compris dans le système d'imagerie, une image d'une zone dans une plage de projection de lumière dans laquelle la lumière à motifs aléatoires est projetée ;
le traitement, par un dispositif de traitement (30) compris dans le système de traitement d'images, l'image capturée par le dispositif d'imagerie du système d'imagerie ;
la génération, par le dispositif de traitement (30), d'une image de parallaxe à partir d'une pluralité des images séparément capturées par la pluralité d'unités d'imagerie (20a, 20b) lorsque la lumière à motifs aléatoires est projetée depuis le dispositif de projection de lumière ; et
la détermination, par un dispositif de commande électronique (50) compris dans le système de traitement d'images, que l'extérieur du corps principal de véhicule (1) est sombre lorsque la luminosité à l'extérieur du corps mobile est inférieure à une valeur prédéterminée,
l'étape de projection de la lumière à motifs aléatoires étant effectuée lorsqu'il est déterminé que l'extérieur du corps principal de véhicule (1) est sombre.

# FIG.1

RANDOM PATTERNED LIGHT

LIGHT PROJECTION RANGE

RANDOM PATTERNED LIGHT

LEFT LENS IMAGING RANGE

RIGHT LENS IMAGING RANGE

10a
10b
10

HEADLIGHT
HEADLIGHT

20a
20b
20

STEREO CAMERA

1

TRAVELLING DIRECTION OF VEHICLE

# FIG.2A

# FIG.2B

# FIG.3

# FIG.4

FIG.5

# FIG.6

# FIG.7

# FIG.8

DISSIMILARITY
(MORE SIMILAR
AS DISSIMILARITY
IS LOWER)

$S(p,d)$

D−3  D−2  D−1  D  D+1  D+2

d(@TARGET PIXEL)

DECIMAL PARALLAX D′
AFTER SUB-PIXEL ESTIMATION

# FIG.9

EP 3 067 826 B1

FIG.10C

FIG.10B

FIG.10A

# FIG.11A

# FIG.11B

EPIPOLAR LINE EL

p(x,y)

q(x+d,y)

d

# FIG.12

# FIG.13

# FIG.14

# FIG.15

```
                    ┌─────────────┐
                    │    START    │
                    └─────────────┘
                           │
        ┌──────────────────▼
        │              ┌───────────────────────┐  S1
        │              │  LIGHT PROJECTION     │
        │              │  CONTROL PROCESS 1    │
        │              └───────────────────────┘
        │                       │
        │              ┌───────────────────────┐  S2
        │              │   PARALLAX IMAGE      │
        │              │  GENERATING PROCESS   │
        │              └───────────────────────┘
        │                       │
        │              ┌───────────────────────┐  S3
        │              │  IMAGE RECOGNITION    │
        │              │      PROCESS          │
        │              └───────────────────────┘
        │                       │
        │              ┌───────────────────────┐  S4
        │              │  BRAKE/OPERATION      │
        │              │  CONTROL PROCESS      │
        │              └───────────────────────┘
        │                       │
        │          YES     ◇─────────◇  S5
        └──────────────  SAFETY MODE ON?
                           ◇─────────◇
                               │ NO
                    ┌─────────────┐
                    │     END     │
                    └─────────────┘
```

# FIG.16

START

↓

IS OUTSIDE
OF VEHICLE DARK? — S11

NO →

YES ↓ — S13

SEND LIGHT ON TRIGGER SIGNAL
AND LIGHT PATTERN DATA
TO HEADLIGHT DEVICE

S12

SEND LIGHT OFF
TRIGGER SIGNAL TO
HEADLIGHT DEVICE

↓

END

# FIG.17

START

S21
IS BRIGHTNESS INFORMATION LESS THAN FIRST REFERENCE VALUE?

NO →

S22
SEND LIGHT OFF TRIGGER SIGNAL TO HEADLIGHT DEVICE

YES

S23
IS BRIGHTNESS INFORMATION LESS THAN SECOND REFERENCE VALUE?

NO →

YES

S24
SEND LIGHT ON TRIGGER SIGNAL AND HIGH CONTRAST LIGHT PATTERN DATA TO HEADLIGHT DEVICE

S25
SEND LIGHT ON TRIGGER SIGNAL AND LOW CONTRAST LIGHT PATTERN DATA TO HEADLIGHT DEVICE

END

EP 3 067 826 B1

**FIG.18**

EP 3 067 826 B1

# FIG.19

START

↓

IS OUTSIDE OF VEHICLE DARK? — S31

NO → SEND LIGHT OFF TRIGGER SIGNAL TO HEADLIGHT DEVICE — S32

YES ↓

IS THERE OBJECT IN FRONT OF VEHICLE? — S33

YES → SEND LIGHT ON TRIGGER SIGNAL AND HIGH CONTRAST LIGHT PATTERN DATA TO HEADLIGHT DEVICE — S34

NO → SEND LIGHT ON TRIGGER SIGNAL AND LOW CONTRAST LIGHT PATTERN DATA TO HEADLIGHT DEVICE — S35

END

EP 3 067 826 B1

# FIG.20

EP 3 067 826 B1

START

S41

IS OUTSIDE
OF VEHICLE DARK?

NO

YES

S42

SEND LIGHT OFF TRIGGER
SIGNAL TO HEADLIGHT
DEVICE

S43

IS TEXTURE AMOUNT
OF ENTIRE IMAGE CAPTURED
BY STEREO CAMERA
LARGE?

NO

YES

S44

SEND LIGHT ON TRIGGER
SIGNAL AND LOW CONTRAST
LIGHT PATTERN DATA
TO HEADLIGHT DEVICE

S45

SEND LIGHT ON TRIGGER
SIGNAL AND HIGH CONTRAST
LIGHT PATTERN DATA
TO HEADLIGHT DEVICE

END

# FIG.21A

| A | B | | C | D |

CERTAIN PIXEL

# FIG.21B

AREA DIAGONALLY
IN FRONT OF VEHICLE

ENTIRE IMAGE

AREA IN FRONT
OF VEHICLE

**FIG.22**

START

S51
IS OUTSIDE OF VEHICLE DARK? — NO → 

YES
S53
SEND LIGHT ON TRIGGER SIGNAL AND LOW CONTRAST LIGHT PATTERN DATA TO HEADLIGHT DEVICE

S52
SEND LIGHT OFF TRIGGER SIGNAL TO HEADLIGHT DEVICE

S54
IS NUMBER OF INVALID PARALLAX PIXELS IN PARALLAX IMAGE LARGE? — NO →

YES
S55
SEND HIGH CONTRAST LIGHT PATTERN DATA TO HEADLIGHT DEVICE

END

EP 3 067 826 B1

**FIG.23**

```
                    ┌──────────────┐
                    │    START     │
                    └──────┬───────┘
                           │
                           ▼                    S61
                    ╱────────────────╲
           NO      ╱   IS OUTSIDE     ╲
    ┌─────────────┤  OF VEHICLE DARK?  ├
    │              ╲                  ╱
    │               ╲────────────────╱
    │                       │ YES
    │                       │           S63
    │              ┌────────▼──────────────┐
    │              │ SEND LIGHT ON TRIGGER │
    │              │ SIGNAL AND LOW        │
    │              │ CONTRAST LIGHT        │
    │              │ PATTERN DATA          │
    │              │ TO HEADLIGHT DEVICE   │
    │              └────────┬──────────────┘
    │                       │           S64
    │            ╱──────────▼──────────╲
    │   NO      ╱   IS THERE OBJECT     ╲
    │   ┌──────┤  IN FRONT OF VEHICLE?   ├
    │   │       ╲                       ╱
    │   │        ╲──────────────────────╱
    │   │                   │ YES   S65
    │   │          ┌────────▼─────────┐
    │   │          │ SEND HIGH        │
    │   │          │ CONTRAST LIGHT   │
    │   │          │ PATTERN DATA     │
    │   │          │ TO HEADLIGHT     │
    │   │          │ DEVICE           │
    │   │          └────────┬─────────┘
    │   └───────────────────┤
    │                       ▼
    │              ┌──────────────┐
    │              │     END      │
    │              └──────────────┘
```

S62 — SEND LIGHT OFF TRIGGER SIGNAL TO HEADLIGHT DEVICE (NO branch from S61)

EP 3 067 826 B1

# FIG.24

```
                    ┌─────────────┐
                    │    START    │
                    └──────┬──────┘
                           │
                           ▼                    S71
                  ╱─────────────────╲
                 ╱   IS OUTSIDE      ╲      NO
                ╱  OF VEHICLE DARK?   ╲──────────────────────┐
                ╲                     ╱                      │
                 ╲───────────────────╱                      │
                           │ YES                            │
                           │        S73                     │
                           ▼                                ▼           S72
              ┌────────────────────────┐         ┌──────────────────────────┐
              │  SEND LIGHT ON TRIGGER  │         │   SEND LIGHT OFF TRIGGER  │
              │ SIGNAL AND HIGH CONTRAST│         │ SIGNAL TO HEADLIGHT DEVICE │
              │   LIGHT PATTERN DATA    │         └──────────────────────────┘
              │   TO HEADLIGHT DEVICE   │
              └────────────┬───────────┘
                           │        S74
                           ▼
                  ╱─────────────────╲
           YES   ╱   IS THERE OBJECT  ╲
         ┌──────╱  IN FRONT OF VEHICLE? ╲
         │      ╲                       ╱
         │       ╲─────────────────────╱
         │                 │ NO
         │                 │    S75
         │                 ▼
         │      ┌──────────────────────┐
         │      │   SEND LOW CONTRAST   │
         │      │  LIGHT PATTERN DATA   │
         │      │  TO HEADLIGHT DEVICE  │
         │      └──────────┬───────────┘
         │                 │
         └────────────────►│◄──────────────────────────────┘
                           ▼
                    ┌─────────────┐
                    │     END     │
                    └─────────────┘
```

EP 3 067 826 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5138517 B
- US 20080029701 A1
- US 20080294315 A1
- US 20110074932 A1
- US 2006072914 A1
- US 2011012510 A1